(19) Europäisches Patentamt
European Patent Office
Office européen des brevets

(11) EP 3 569 752 B1

(12) **EUROPEAN PATENT SPECIFICATION**

(45) Date of publication and mention of the grant of the patent:
**26.08.2020 Bulletin 2020/35**

(21) Application number: **18197230.8**

(22) Date of filing: **27.09.2018**

(51) Int Cl.:
***D04H 1/4342*** (2012.01) ***D04H 1/4326*** (2012.01)
***D04H 1/435*** (2012.01) ***B32B 5/02*** (2006.01)
***B32B 5/26*** (2006.01)

(54) **NONWOVEN FABRIC AND ASSOCIATED COMPOSITE AND METHODS OF MAKING**

VLIESSTOFF UND ZUGEHÖRIGER VERBUNDSTOFF UND VERFAHREN ZUR HERSTELLUNG

TISSU NON TISSÉ ET COMPOSITE ASSOCIÉ ET PROCÉDÉS DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.05.2018 US 201862671492 P**

(43) Date of publication of application:
**20.11.2019 Bulletin 2019/47**

(73) Proprietor: **SABIC Global Technologies B.V.**
**4612 PX Bergen op Zoom (NL)**

(72) Inventors:
- **SOHN, Sungkyun**
  **Houston, Texas 77042 (US)**
- **LAWRENCE, Stanley Leroy**
  **Houston, Texas 77042 (US)**

(74) Representative: **Modiano, Micaela Nadia et al**
**Modiano & Partners**
**Thierschstrasse 11**
**80538 München (DE)**

(56) References cited:
**WO-A1-2015/168116** **US-A1- 2012 065 283**
**US-B2- 7 790 292**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 569 752 B1

## Description

BACKGROUND OF THE INVENTION

Fiber-reinforced thermoplastics are increasingly used in the fabrication of interior parts for vehicles including aircraft, ships, and trains. For example, U.S. Patent Application Publication No. US 2012/0065283 A1 of Adjei et al. describes a nonwoven fabric prepared from reinforcing fibers, polyimide fibers, and polymeric binder fibers. Multiple layers of the nonwoven fabric are combined under elevated temperature and pressure to form a composite sheet that is optionally combined with a decorative film to form the vehicular interior part. Such parts exhibit advantageous properties including low weight, high flame retardancy, and low smoke generation. However, there is a desire for nonwoven fabrics that facilitate handling, as well as composite sheets that exhibit improved surface uniformity.

BRIEF SUMMARY OF EMBODIMENTS OF THE INVENTION

One embodiment is a nonwoven fabric, comprising, based on the weight of the nonwoven fabric: 25 to 55 weight percent of reinforcing fibers, 35 to 65 weight percent of a polyimide, and 5 to 20 weight percent of a block polyestercarbonate-polysiloxane; wherein the block polyestercarbonate-polysiloxane comprises a polyester block comprising resorcinol ester units having the structure

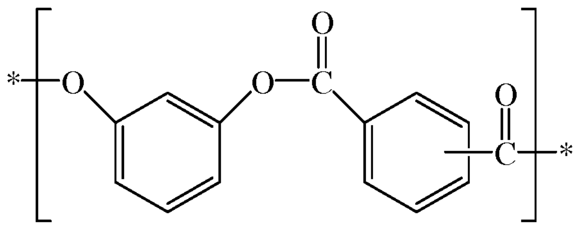

,

a polycarbonate block comprising carbonate units having the structure

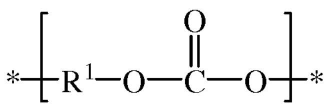

wherein at least 60 percent of the total number of $R^1$ groups are aromatic divalent groups, and a polysiloxane block comprising dimethylsiloxane units; wherein the block polyestercarbonate-polysiloxane comprises, based on total moles of carbonate and ester units, 30 to 90 mole percent of resorcinol ester, 5 to 35 mole percent of carbonate units wherein $R^1$ is 1,3-phenylene, and 5 to 35 mole percent of carbonate units wherein $R^1$ is 2,2-bis(1,4-phenylene)propane, and further comprises, based on the weight of the block polyestercarbonate-polysiloxane, 0.2 to 4 weight percent dimethylsiloxane units; wherein the nonwoven fabric has a density of 0.03 to 0.2 gram/centimeter$^3$, and an areal density of 100 to 400 gram/meter$^2$; and wherein the nonwoven fabric has a tensile modulus of 50 to 1000 megapascals, determined according to ASTM D638-14 at a temperature of 23 °C and using a test speed of 50 millimeters/minute.

Another embodiment is a method of forming a nonwoven fabric, the method comprising: forming an aqueous suspension layer comprising water, 25 to 55 weight percent of reinforcing fibers, 35 to 65 weight percent of polyimide fibers, and 5 to 20 weight percent of binder fibers comprising a block polyestercarbonate-polysiloxane, wherein weight percent values are based on the total weight of reinforcing fibers, polyimide fibers, and binder fibers; at least partially removing water from the aqueous suspension layer to form a fiber layer; and exposing the fiber layer to a temperature of 250 to 320 °C, thereby melting the binder fibers, at least partially melting the polyimide fibers, and forming a nonwoven fabric; wherein the block polyestercarbonate-polysiloxane comprises a polyester block comprising resorcinol ester units having the structure

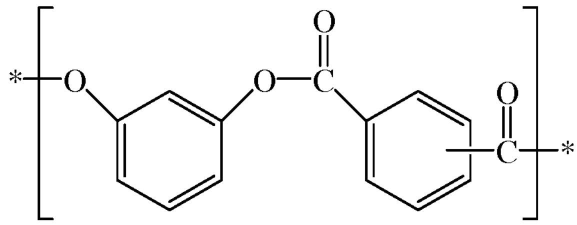

,

a polycarbonate block comprising carbonate units having the structure

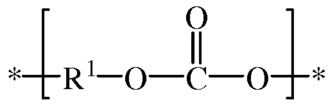

wherein at least 60 percent of the total number of $R^1$ groups are aromatic divalent groups, and a polysiloxane block comprising dimethylsiloxane units; wherein the block polyestercarbonate-polysiloxane comprises, based on total moles of carbonate and ester units, 30 to 90 mole percent of resorcinol ester, 5 to 35 mole percent of carbonate units wherein $R^1$ is 1,3-phenylene, and 5 to 35 mole percent of carbonate units wherein $R^1$ is 2,2-bis(1,4-phenylene)propane, and further comprises, based on the weight of the block polyestercarbonate-polysiloxane, 0.2 to 4 weight percent dimethylsiloxane units.

Another embodiment is a composite, comprising, based on the weight of the composite: 25 to 55 weight percent of reinforcing fibers, 35 to 65 weight percent of a polyimide, and 5 to 20 weight percent of a block polyestercarbonate-polysiloxane; wherein the block polyestercarbonate-polysiloxane comprises a polyester block comprising resorcinol ester units having the structure

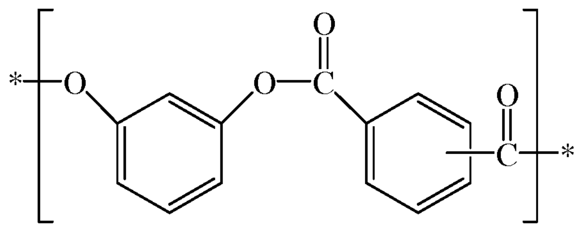

,

a polycarbonate block comprising carbonate units having the structure

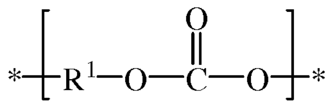

wherein at least 60 percent of the total number of $R^1$ groups are aromatic divalent groups, and a polysiloxane block comprising dimethylsiloxane units; wherein the block polyestercarbonate-polysiloxane comprises, based on total moles of carbonate and ester units, 30 to 90 mole percent of resorcinol ester, 5 to 35 mole percent of carbonate units wherein $R^1$ is 1,3-phenylene, and 5 to 35 mole percent of carbonate units wherein $R^1$ is 2,2-bis(1,4-phenylene)propane, and further comprises, based on the weight of the block polyestercarbonate-polysiloxane, 0.2 to 4 weight percent dimethylsiloxane units; and wherein the composite has a density of 0.92 to 1.38 gram/centimeter$^3$, and an areal density of 100 to 3000 gram/meter$^2$.

Another embodiment is a method of forming a multilayer composite, the method comprising: exposing at least two layers of the nonwoven fabric in any of its variations to a temperature of 250 to 400 °C and a pressure of 300 to 1,500 kilopascals for a time of 60 to 600 seconds to yield a multilayer composite.

These and other embodiments are described in detail below.

BRIEF DESCRIPTION OF THE DRAWINGS

Figure 1 is a schematic illustration of a melt spinning apparatus.
Figure 2 is a schematic illustration of a papermaking apparatus.
Figure 3 provides images of rolls of (a) 325 gram/meter$^2$ non-consolidated nonwoven fabric, and (b) 165 gram/meter$^2$ pre-consolidated nonwoven fabric.
Figure 4 provides optical micrographs of cross-sections of (a) 325 gram/meter$^2$ non-consolidated nonwoven fabric, and (b) 165 gram/meter$^2$ pre-consolidated nonwoven fabric.
Figure 5 provides surface profiles derived from optical micrographs of (a) 325 gram/meter$^2$ non-consolidated nonwoven fabric, and (b) 165 gram/meter$^2$ pre-consolidated nonwoven fabric.

DETAILED DESCRIPTION OF THE INVENTION

The present inventors have determined that nonwoven fabrics can be formulated to exhibit increased stiffness that facilitates handling of the fabrics as they are used to prepare composites. The formulation of the present nonwoven fabric also leads to better retention of reinforcing fibers during handling of the nonwoven fabric. And use of the present nonwoven fabric also improves the surface uniformity of composites prepared from it.

Thus, one embodiment is a nonwoven fabric, comprising, based on the weight of the nonwoven fabric: 25 to 55 weight percent of reinforcing fibers, 35 to 65 weight percent of a polyimide, and 5 to 20 weight percent of a block polyestercarbonate-polysiloxane; wherein the block polyestercarbonate-polysiloxane comprises a polyester block comprising resorcinol ester units having the structure

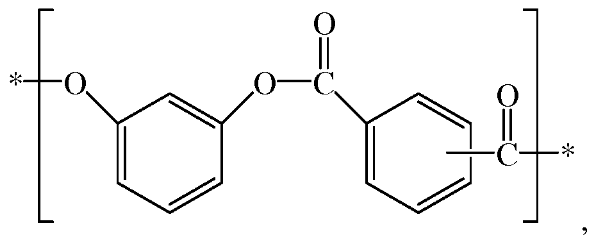

a polycarbonate block comprising carbonate units having the structure

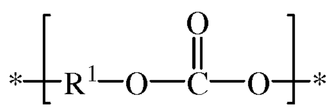

wherein at least 60 percent of the total number of $R^1$ groups are aromatic divalent groups, and a polysiloxane block comprising dimethylsiloxane units; wherein the block polyestercarbonate-polysiloxane comprises, based on total moles of carbonate and ester units, 30 to 90 mole percent of resorcinol ester, 5 to 35 mole percent of carbonate units wherein $R^1$ is 1,3-phenylene, and 5 to 35 mole percent of carbonate units wherein $R^1$ is 2,2-bis(1,4-phenylene)propane, and further comprises, based on the weight of the block polyestercarbonate-polysiloxane, 0.2 to 4 weight percent dimethylsiloxane units; wherein the nonwoven fabric has a density of 0.03 to 0.2 gram/centimeter$^3$, and an areal density of 100 to 400 gram/meter$^2$; and wherein the nonwoven fabric has a tensile modulus of 50 to 1000 megapascals, determined according to ASTM D638-14 at a temperature of 23 °C and using a test speed of 50 millimeters/minute.

The nonwoven fabric includes reinforcing fibers. Reinforcing fibers include metal fibers, metallized inorganic fibers, metallized synthetic fibers, glass fibers, graphite fibers, carbon fibers, ceramic fibers, mineral fibers, basalt fibers, polymer fibers having a melting or glass transition temperature at least 150° C higher than the glass transition temperature of polyimide, and combinations thereof. In some embodiments, the reinforcing fibers comprise glass fibers. As used herein, the term "fibers" refers specifically to fibers having a diameter of 5 to 125 micrometers, and a length of 5 to 75 millimeters. Within the range of 5 to 125 micrometers, the diameter can be 10 to 100 micrometers, or 10 to 50 micrometers, or 10 to 25 micrometers. Within the range of 5 to 75 millimeters, the fiber length can be 6 to 50 millimeters, or 7 to 40 millimeters, or 10 to 30 millimeters.

The nonwoven fabric includes the reinforcing fibers in an amount of 25 to 55 weight percent, based on the weight of the nonwoven fabric. Within this range, the amount of reinforcing fibers can be 30 to 50 weight percent.

In addition to the reinforcing fibers, the nonwoven fabric comprises a polyimide. A polyimide is a polymer comprising a plurality of repeating units having the structure

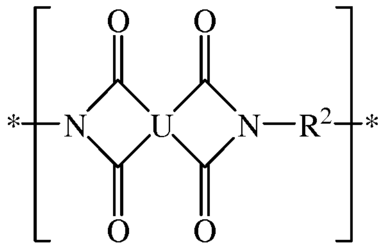

wherein U is independently at each occurrence a tetravalent linker selected from the group consisting of substituted or unsubstituted, saturated, unsaturated, or aromatic monocyclic and polycyclic groups having 5 to 50 carbon atoms, substituted or unsubstituted alkyl groups having 1 to 30 carbon atoms, and substituted or unsubstituted alkenyl groups having 2 to 30 carbon atoms; and $R^2$ is independently at each occurrence a divalent group selected from the group consisting of substituted or unsubstituted divalent aromatic hydrocarbon moieties having 6 to 20 carbons, straight or branched chain alkylene moieties having 2 to 20 carbons, cycloalkylene moieties having 3 to 20 carbon atom, and divalent moieties of the general formula

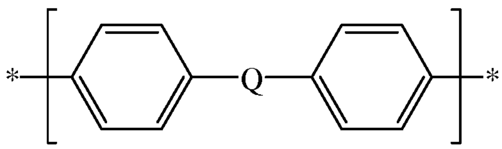

wherein Q is selected from the group consisting of -O-, -S-, -C(O)-, $-S(O)_2-$, -S(O)-, and $-C_yH_{2y}-$where y is 1 to 20. The number of repeating units in the polyimide can be, for example, 10 to 1,000, specifically 10 to 500.

Exemplary tetravalent linkers, U, include tetravalent aromatic radicals of the formula

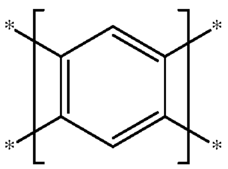 , 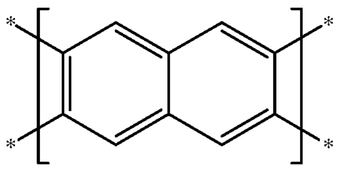

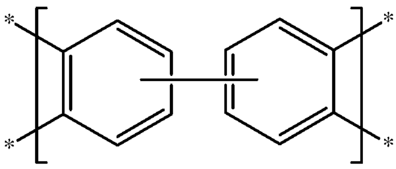 , and 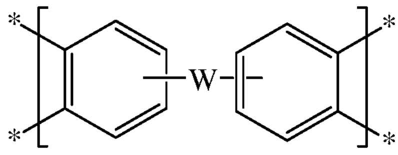 ,

wherein W is a divalent moiety such as -O-, -S-, -C(O)-, $-SO_2-$, -SO-, $-C_yH_{2y}-$ (y being an integer of 1 to 20), and halogenated derivatives thereof, including perfluoroalkylene groups, or a group of the Formula -O-Z-O- wherein the divalent bonds of the -O- or the -O-Z-O- group are in the 3,3', 3,4', 4,3', or the 4,4' positions, and wherein Z includes divalent moieties of the formula

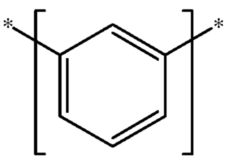 , 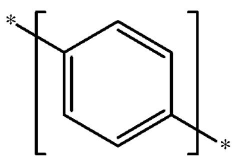 , 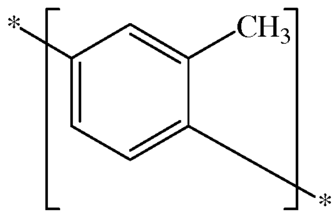 ,

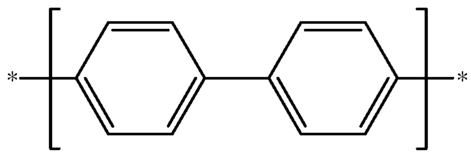, 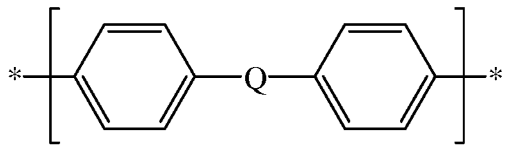,

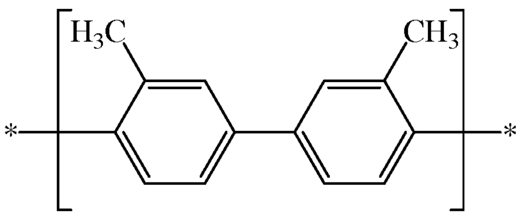, 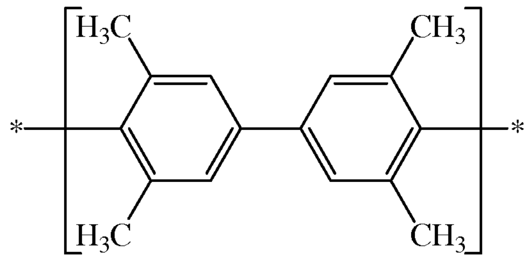,

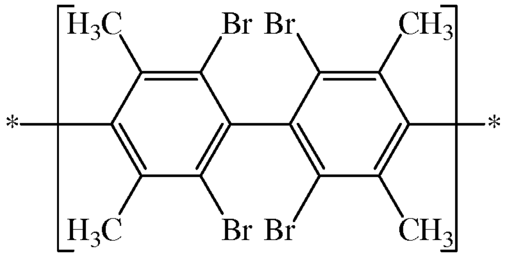, and 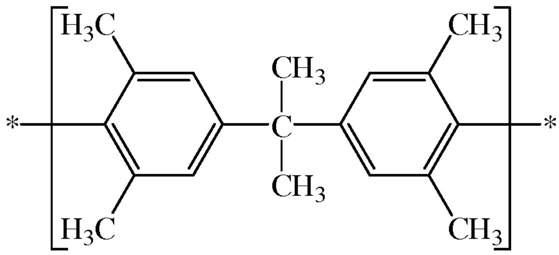,

wherein Q is divalent moiety that can be -O-, -S-, -C(O)-, $-SO_2-$, -SO-, $-C_yH_{2y}-$ wherein y is 1 to 8, or $-C_pH_qF_r-$ where p is from 1 to 8 and q is 0 to 15 and r is 1 to 16 and q + r = 2p. In some embodiments the tetravalent linker U is free of halogens.

In some embodiments, the polyimide comprises a polyetherimide. Polyetherimides comprise repeating units of formula

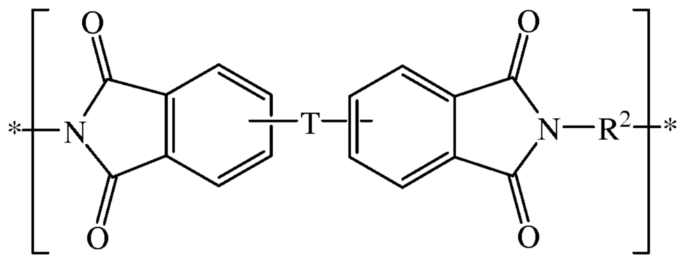

wherein T is -O- or a group of the Formula -O-Z-O- wherein the divalent bonds of the -O- or the -O-Z-O- group are in the 3,3', 3,4', 4,3', or the 4,4' positions of the phthalimide groups, and wherein Z and $R^2$ are defined as described above. In some embodiments, each occurrence of $R^2$ is independently p-phenylene or m-phenylene, and T is a divalent moiety of the formula

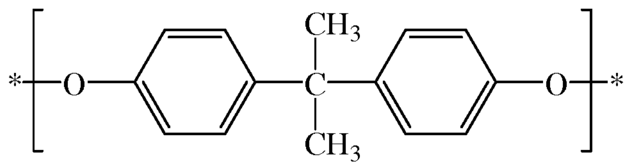.

Included among the many methods of making polyimides, including polyetherimides, are those disclosed in U.S. Patent Nos. 3,847,867 to Heath et al., 3,850,885 to Takekoshi et al., 3,852,242 and 3,855,178 to White, 3,983,093 to Williams et al., and 4,443,591 to Schmidt et al.

In some embodiments, the polyimide comprises a polyetherimide comprising 10 to 1000 repeating units having

the structure

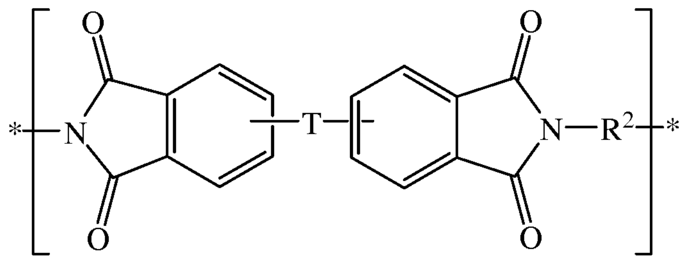

wherein T is -O- or a group of the formula -O-Z-O- wherein the divalent bonds of the -O- or the -O-Z-O- group are in the 3,3', 3,4', 4,3', or the 4,4' positions, and wherein Z is selected from the group consisting of

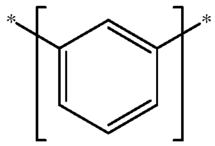
,
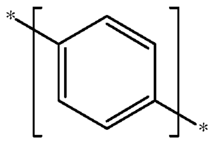
,
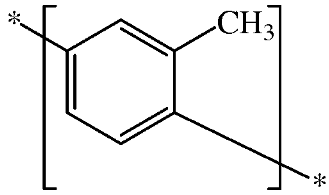
,
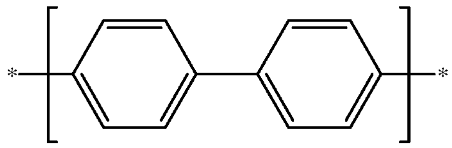
,
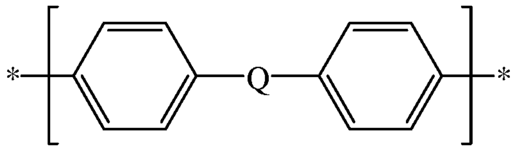
,
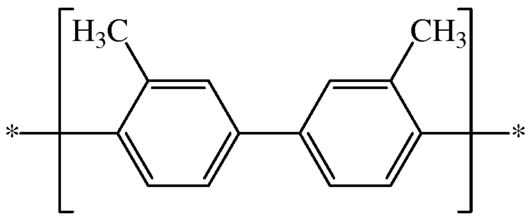
,
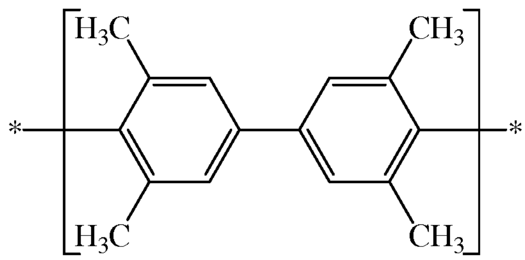
,
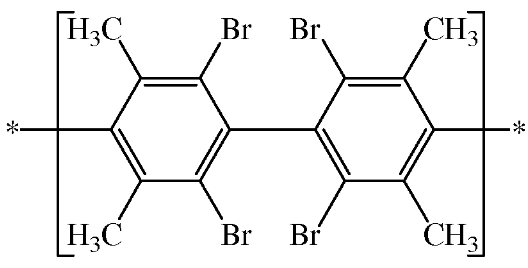
, and
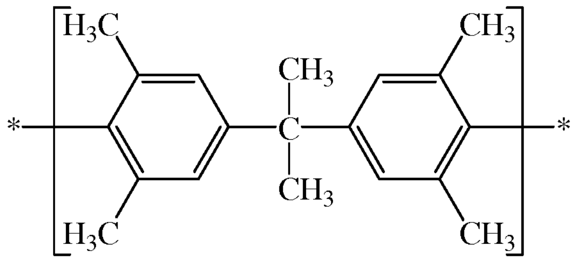
,

wherein Q is divalent moiety selected from the group consisting of -O-, -S-, -C(O)-, $-SO_2-$, -SO-, $-C_yH_{2y}-$ where y is 1 to 8, and $-C_pH_qF_r-$ where p is from 1 to 8, q is 0 to 15, r is 1 to 16, and q + r = 2p; and $R^2$ is defined as described above.

In some embodiments, $R^2$ is independently at each occurrence meta-phenylene or para-phenylene, and U has the structure

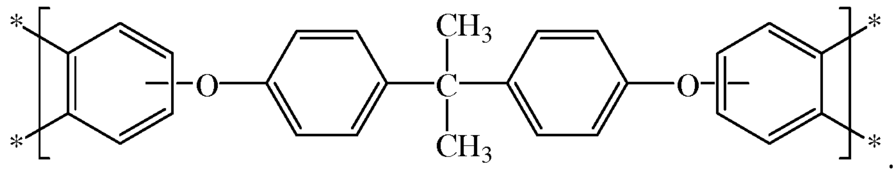

The repeating units of the polyimide are formed by the reaction of a dianhydride and a diamine. Dianhydrides useful for forming the repeating units include those having the formula

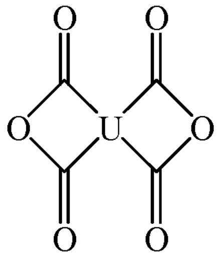

wherein U is as defined above. As mentioned above the term dianhydrides includes chemical equivalents of dianhydrides. In some embodiments, the dianhydride comprises an aromatic bis(ether anhydride). Examples of specific aromatic bis(ether anhydride)s are disclosed, for example, in U.S. Patent Nos. 3,972,902 to Heath et al. and 4,455,410 to Giles. Illustrative examples of aromatic bis(ether anhydride)s include 2,2-bis[4-(3,4-dicarboxyphenoxy)phenyl]propane dianhydride, 4,4'-bis(3,4-dicarboxyphenoxy)diphenyl ether dianhydride, 4,4'-bis(3,4-dicarboxyphenoxy)diphenyl sulfide dianhydride, 4,4'-bis(3,4-dicarboxyphenoxy)benzophenone dianhydride, 4,4'-bis(3,4-dicarboxyphenoxy)diphenyl sulfone dianhydride, 2,2-bis[4-(2,3-dicarboxyphenoxy)phenyl]propane dianhydride, 4,4'-bis(2,3-dicarboxyphenoxy)diphenyl ether dianhydride, 4,4'-bis(2,3-dicarboxyphenoxy)diphenyl sulfide dianhydride, 4,4'-bis(2,3-dicarboxyphenoxy)benzophenone dianhydride, 4,4'-bis(2,3-dicarboxyphenoxy)diphenyl sulfone dianhydride, 4-(2,3-dicarboxyphenoxy)-4'-(3,4-dicarboxyphenoxy)diphenyl-2,2-propane dianhydride, 4-(2,3-dicarboxyphenoxy)-4'-(3,4-dicarboxyphenoxy)diphenyl ether dianhydride, 4-(2,3-dicarboxyphenoxy)-4'-(3,4-dicarboxyphenoxy)diphenyl sulfide dianhydride, 4-(2,3-dicarboxyphenoxy)-4'-(3,4-dicarboxyphenoxy)benzophenone dianhydride, 4-(2,3-dicarboxyphenoxy)-4'-(3,4-dicarboxyphenoxy)diphenyl sulfone dianhydride, and mixtures thereof.

Diamines useful for forming the repeating units of the polyimide include those having the formula

$$H_2N\text{-}R^2\text{-}NH_2$$

wherein $R^2$ is as defined above. Examples of specific organic diamines are disclosed, for example, in U.S. Patent Nos. 3,972,902 to Heath et al. and 4,455,410 to Giles. Exemplary diamines include ethylenediamine, propylenediamine, trimethylenediamine, diethylenetriamine, triethylenetertramine, hexamethylenediamine, heptamethylenediamine, octamethylenediamine, nonamethylenediamine, decamethylenediamine, 1,12-dodecanediamine, 1,18-octadecanediamine, 3-methylheptamethylenediamine, 4,4-dimethylheptamethylenediamine, 4-methylnonamethylenediamine, 5-methylnonamethylenediamine, 2,5-dimethylhexamethylenediamine, 2,5-dimethylheptamethylenediamine, 2,2-dimethylpropylenediamine, N-methyl-bis (3-aminopropyl) amine, 3-methoxyhexamethylenediamine, 1,2-bis(3-aminopropoxy) ethane, bis(3-aminopropyl) sulfide, 1,4-cyclohexanediamine, bis-(4-aminocyclohexyl) methane, m-phenylenediamine, p-phenylenediamine, 2,4-diaminotoluene, 2,6-diaminotoluene, m-xylylenediamine, p-xylylenediamine, 2-methyl-4,6-diethyl-1,3-phenylenediamine, 5-methyl-4,6-diethyl-1,3-phenylenediamine, benzidine, 3,3'-dimethylbenzidine, 3,3'-dimethoxybenzidine, 1,5-diaminonaphthalene, bis(4-aminophenyl) methane, bis(2-chloro-4-amino-3, 5-diethylphenyl) methane, bis(4-aminophenyl) propane, 2,4-bis(p-amino-t-butyl) toluene, bis(p-amino-t-butylphenyl) ether, bis(p-methyl-o-aminophenyl) benzene, bis(p-methyl-o-aminopentyl) benzene, 1, 3-diamino-4-isopropylbenzene, bis(4-aminophenyl) sulfide, bis (4-aminophenyl) sulfone, bis(4-aminophenyl) ether, 1,3-bis(3-aminopropyl) tetramethyldisiloxane, and mixtures thereof. In some embodiments, the diamine is an aromatic diamine, more specifically, m-phenylenediamine, p-phenylenediamine, sulfonyl dianiline, or a mixture thereof.

In general, polyimide-forming reactions can be carried out employing various solvents, e.g., o-dichlorobenzene, m-cresol/toluene, and the like, to effect a reaction between the dianhydride and the diamine, at temperatures of 100°C to 250°C. Alternatively, the polyimide block can be prepared by melt polymerization or interfacial polymerization, e.g., melt polymerization of an aromatic bis(anhydride) and a diamine by heating a mixture of the starting materials to elevated temperatures with concurrent stirring. Generally, melt polymerizations employ temperatures of 200°C to 400°C.

A chain-terminating agent can be employed to control the molecular weight of the polyimide. Monofunctional amines such as aniline, or monofunctional anhydrides such as phthalic anhydride can be employed.

In some embodiments, the polyimide has a melt index of 0.1 to 10 grams per minute, determined according to ASTM D 1238-04 at 350°C, using a 6.6 kilogram (kg) load. In some embodiments, the polyetherimide resin has a weight average molecular weight of 10,000 to 150,000 grams per mole, as determined by gel permeation chromatography using polystyrene standards. In some embodiments, the polyetherimide has a weight average molecular weight of 20,000 to 60,000. In some embodiments, the polyimide has an intrinsic viscosity greater than or equal to 0.2 deciliter per gram, specifically 0.35 to 0.7 deciliter per gram, measured by Ubbelohde viscometer in m-cresol at 25°C.

The nonwoven fabric includes the polyimide in an amount of 35 to 65 weight percent, based on the weight of the nonwoven fabric. Within this range, the amount of polyimide can be 40 to 60 weight percent.

In addition to the reinforcing fibers and the polyimide, the nonwoven fabric comprises a block polyestercarbonate-polysiloxane. A block polyestercarbonate-polysiloxane is a copolymer comprising at least one polyester block, at least one polycarbonate block, and at least one polysiloxane block. Specifically, the at least one polyester block comprises resorcinol ester units, each resorcinol ester unit having the structure

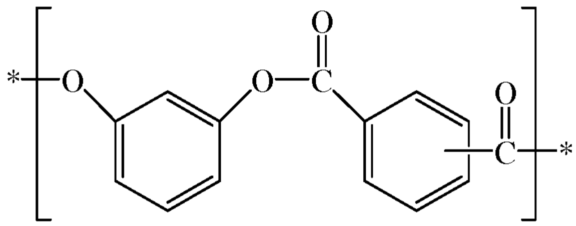
,

the at least one polycarbonate block comprises carbonate units, each carbonate unit having the structure

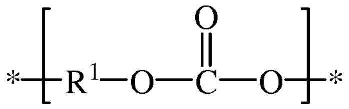

wherein at least 60 percent of the total number of $R^1$ groups are aromatic divalent groups, and the at least one polysiloxane block comprises dimethylsiloxane units.

In some embodiments, the aromatic divalent groups are $C_6$-$C_{24}$ aromatic divalent groups. When not all $R^1$ groups are aromatic, the remainder are $C_2$-$C_{24}$ aliphatic divalent groups. In some embodiments, each $R^1$ is a radical of the formula

$$*[A^1\text{-}Y^1\text{-}A^2]*$$

wherein each of $A^1$ and $A^2$ is independently a monocyclic divalent aryl radical, and $Y^1$ is a bridging radical having one or two atoms that separate $A^1$ from $A^2$. Examples of $A^1$ and $A^2$ include 1,3-phenylene and 1,4-phenylene, each optionally substituted with one, two, or three $C_1$-$C_6$ alkyl groups. The bridging radical $Y^1$ can be a $C_1$-$C_{12}$ (divalent) hydrocarbylene group. As used herein, the term "hydrocarbyl", whether used by itself, or as a prefix, suffix, or fragment of another term, refers to a residue that contains only carbon and hydrogen unless it is specifically identified as "substituted hydrocarbyl". The hydrocarbyl residue can be aliphatic or aromatic, straight-chain, cyclic, branched, saturated, or unsaturated. It can also contain combinations of aliphatic, aromatic, straight chain, cyclic, bicyclic, branched, saturated, and unsaturated hydrocarbon moieties. When the hydrocarbyl residue is described as substituted, it can contain heteroatoms in addition to carbon and hydrogen. In some embodiments, one atom separates $A^1$ from $A^2$. Illustrative examples of $Y^1$ radicals are -O-, -S-, -S(O)-, $-S(O)_2-$, -C(O)-, methylene ($-CH_2-$; also known as methylidene), ethylidene ($-CH(CH_3)-$), isopropylidene ($-C(CH_3)_2-$), neopentylidene, cyclohexylidene, cyclopentadecylidene, cyclododecylidene, adamantylidene, cyclohexylidene methylene, cyclohexylmethylene, and 2-[2.2.1]-bicycloheptylidene.

In some embodiments, the resorcinol ester units comprise resorcinol isophthalate/terephthalate units, and the carbonate units comprise resorcinol carbonate units and bisphenol A carbonate units.

The block polyestercarbonate-polysiloxane comprises, based on total moles of carbonate and ester units, 30 to 90 mole percent of the resorcinol ester units, 5 to 35 mole percent of carbonate units wherein $R^1$ is 1,3-phenylene (i.e., the carbonate units are resorcinol carbonate units), and 5 to 35 mole percent of carbonate units wherein $R^1$ is 2,2-bis(1,4-phenylene)propane, which has the chemical structure

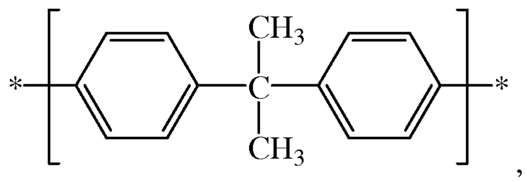

(i.e., the carbonate units are bisphenol A carbonate units). Within the range of 30 to 90 mole percent, the amount of resorcinol ester units can be 50 to 90 mole percent, or 70 to 90 mole percent. Within the range of 5 to 35 mole percent, the amount of resorcinol carbonate units can be 5 to 25 mole percent, or 5 to 15 mole percent. Within the range of 5 to 35 mole percent, the amount of bisphenol A carbonate units can be 5 to 25 mole percent, or 5 to 15 mole percent. The block polyestercarbonate-polysiloxane further comprises, based on the weight of the block polyestercarbonate-polysiloxane, 0.2 to 4 weight percent dimethylsiloxane units. Within this range, the amount of dimethylsiloxane units can be 0.4 to 2 weight percent, or 0.5 to 2 weight percent.

In a very specific embodiment, the block polyestercarbonate-polysiloxane comprises, based on total moles of carbonate and ester units, 70 to 90 mole percent of resorcinol isophthalate/terephthalate units, 5 to 15 mole percent of resorcinol carbonate units, and 5 to 15 mole percent of bisphenol A carbonate units, and further comprises dimethylsiloxane units in an amount, based on the total weight of the block polyestercarbonate-polysiloxane, of 0.5 to 2 weight percent.

There is no particular limit on the structure of end groups on the block polyestercarbonate-polysiloxane. An end-capping agent (also referred to as a chain stopping agent or chain terminating agent) can be included during polymerization to provide end groups. Examples of end-capping agents include monocyclic phenols such as phenol, p-cyanophenol, and $C_1$-$C_{22}$ alkyl-substituted phenols such as p-cumylphenol, resorcinol monobenzoate, and p-tertiary-butyl phenol; monoethers of diphenols, such as p-methoxyphenol; monoesters of diphenols such as resorcinol monobenzoate; functionalized chlorides of aliphatic monocarboxylic acids such as acryloyl chloride and methacryoyl chloride; and mono-chloroformates such as phenyl chloroformate, alkyl-substituted phenyl chloroformates, p-cumyl phenyl chloroformate, and toluene chloroformate. Combinations of different end groups can be used. In some embodiments, the block polyestercarbonate-polysiloxane has a weight average molecular weight of 15,000 to 55,000 grams/mole, as determined by gel permeation chromatography using polycarbonate standards. Within this range, the weight average molecular weight can be 18,000 to 50,000 grams/mole.

Methods for the preparation of block polyestercarbonate-polysiloxanes are known and described, for example, in U.S. Patent No. 7,790,292 B2 to Colborn et al.

The nonwoven fabric comprises the block polyestercarbonate-polysiloxane in an amount of 5 to 20 weight percent, based on the weight of the nonwoven fabric. Within this range, the amount of block polyestercarbonate-polysiloxane can be 5 to 15 weight percent.

The nonwoven fabric can, optionally, further comprise an organophosphate ester flame retardant. Exemplary organophosphate ester flame retardants include phosphate esters comprising phenyl groups, substituted phenyl groups, or a combination of phenyl groups and substituted phenyl groups, bis-aryl phosphate esters based upon resorcinol such as, for example, resorcinol bis(diphenyl phosphate), as well as those based upon bisphenols such as, for example, bisphenol A bis(diphenyl phosphate). In some embodiments, the organophosphate ester is selected from tris(alkylphenyl) phosphates (for example, CAS Reg. No. 89492-23-9 or CAS Reg. No. 78-33-1), resorcinol bis(diphenyl phosphate) (CAS Reg. No. 57583-54-7), bisphenol A bis(diphenyl phosphate) (CAS Reg. No. 181028-79-5), triphenyl phosphate (CAS Reg. No. 115-86-6), tris(isopropylphenyl) phosphates (for example, CAS Reg. No. 68937-41-7), t-butylphenyl diphenyl phosphates (CAS Reg. No. 56803-37-3), bis(t-butylphenyl) phenyl phosphates (CAS Reg. No. 65652-41-7), tris(t-butylphenyl) phosphates (CAS Reg. No. 78-33-1), and combinations thereof. In some embodiments, the nonwoven fabric excludes flame retardants other than the organophosphate ester. For example, the nonwoven fabric can exclude brominated polycarbonate. In some embodiments, the organophosphate ester is halogen-free. In some embodiments, the organophosphate ester comprises an oligomeric phosphate ester, which can be a halogen-free oligomeric phosphate ester.

When the nonwoven fabric comprises the organophosphate ester flame retardant, it is present in an amount of 0.2 to 2 weight percent, based on the weight of the nonwoven fabric. Within this range, the amount of the organophosphate ester flame retardant can be 0.3 to 1 weight percent, or 0.4 to 0.9 weight percent.

The nonwoven fabric can, optionally, further comprise one or more additives known in the thermoplastics art. Suitable additives include, for example, stabilizers, mold release agents, lubricants, processing aids, drip retardants, nucleating agents, UV blockers, dyes, pigments, antioxidants, anti-static agents, blowing agents, mineral oil, metal deactivators, antiblocking agents, and combinations thereof. When present, such additives are typically used in a total amount of less than or equal to 1 weight percent, based on the weight of the nonwoven fabric. In some embodiments, additives are used in an amount of less than or equal to 0.5 weight percent, or less than or equal to 0.2 weight percent.

In some embodiments of the nonwoven fabric, the block polyestercarbonate-polysiloxane comprises, based on total moles of carbonate and ester units, 70 to 90 mole percent of the resorcinol ester units, 5 to 15 mole percent of carbonate units wherein $R^1$ is 1,3-phenylene, and 5 to 15 mole percent of carbonate units wherein $R^1$ is 2,2-bis(1,4-phenylene)propane, and further comprises, based on the weight of the block polyestercarbonate-polysiloxane, 0.3 to 3 weight percent dimethylsiloxane units; and wherein the nonwoven fabric further comprises 0.2 to 2 weight percent of an organophosphate ester flame retardant.

In a very specific embodiment of the nonwoven fabric, it comprises, based on the weight of the nonwoven fabric, 30 to 50 weight percent of the reinforcing fibers, 40 to 60 weight percent of the polyimide, and 5 to 15 weight percent of the block polyestercarbonate-polysiloxane, and further comprises, based on the weight of the nonwoven fabric, 0.3 to 3 weight percent of a flame retardant; the reinforcing fibers comprise glass fibers; the polyimide comprises a polyetherimide; the block polyestercarbonate-polysiloxane comprises, based on total moles of carbonate and ester units in the block polyestercarbonate-polysiloxane, 70 to 90 mole percent of the resorcinol ester units, 5 to 15 mole percent of carbonate units wherein $R^1$ is 1,3-phenylene, and 5 to 15 mole percent of carbonate units wherein $R^1$ is 2,2-bis(1,4-phenylene)propane, and further comprises, based on the weight of the block polyestercarbonate-polysiloxane, 0.3 to 3 weight percent dimethylsiloxane units; and the flame retardant comprises an oligomeric phosphate ester.

The nonwoven fabric has a density of 0.03 to 0.2 gram/centimeter$^3$. Density can be determined at 23 °C according to ASTM D792-13. Within the range of 0.03 to 0.2 gram/centimeter$^3$, the density can be 0.033 to 0.17 gram/centimeter$^3$.

The nonwoven fabric has an areal density of 100 to 400 gram/meter$^2$. Areal density can be determined at 23 °C by weighing a 1.000 meter section of fabric. Within the range of 100 to 400 gram/meter$^2$, the areal density can be 100 to 300 gram/meter$^2$.

The nonwoven fabric has a tensile modulus of 50 to 1000 megapascals, determined according to ASTM D638-14 at a temperature of 23 °C and using a test speed of 50 millimeters/minute. Within the range of 50 to 1000 megapascals, the tensile modulus can be 150 to 600 megapascals.

One embodiment is a method of forming a nonwoven fabric, the method comprising: forming an aqueous suspension layer comprising water, 25 to 55 weight percent of reinforcing fibers, 35 to 65 weight percent of polyimide fibers, and 5 to 20 weight percent of binder fibers comprising a block polyestercarbonate-polysiloxane, wherein weight percent values are based on the total weight of reinforcing fibers, polyimide fibers, and binder fibers; at least partially removing water from the aqueous suspension layer to form a fiber layer; and exposing the fiber layer to a temperature of 250 to 320 °C, thereby melting the binder fibers, at least partially melting the polyimide fibers, and forming a nonwoven fabric; wherein the block polyestercarbonate-polysiloxane comprises a polyester block comprising resorcinol ester units having the structure

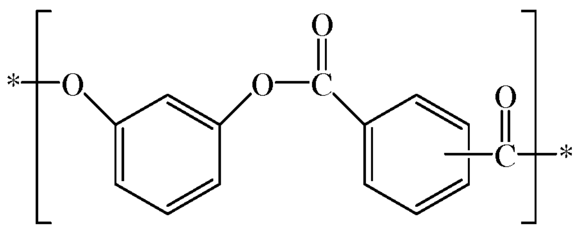

,

a polycarbonate block comprising carbonate units having the structure

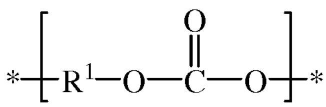

wherein at least 60 percent of the total number of $R^1$ groups are aromatic divalent groups, and a polysiloxane block comprising dimethylsiloxane units; wherein the block polyestercarbonate-polysiloxane comprises, based on total moles of carbonate and ester units, 30 to 90 mole percent of resorcinol ester, 5 to 35 mole percent of carbonate units wherein $R^1$ is 1,3-phenylene, and 5 to 35 mole percent of carbonate units wherein $R^1$ is 2,2-bis(1,4-phenylene)propane, and further comprises, based on the weight of the block polyestercarbonate-polysiloxane, 0.2 to 4 weight percent dimethylsiloxane units.

The method comprises forming an aqueous suspension layer comprising water, reinforcing fibers, polyimide fibers, and binder fibers. The aqueous suspension layer can be formed by depositing an aqueous suspension of fibers onto a screen that retains the fibers.

The aqueous suspension layer comprises water, which is the residual water after at least partially draining the liquid portion of the aqueous suspension through the screen. The water content of the aqueous suspension layer is typically 1 to 25 weight percent, based on the weight of the aqueous suspension layer, and depending on the degree of drainage.

The aqueous suspension layer further comprises reinforcing fibers. The reinforcing fibers are the same as those described above in the context of the nonwoven fabric. The aqueous suspension layer comprises the reinforcing fibers in an amount of 25 to 55 weight percent, based on the total weight of reinforcing fibers, polyimide fibers, and binder fibers. Within this range, the amount of reinforcing fibers can be 30 to 50 weight percent.

The aqueous suspension layer further comprises polyimide fibers. The term "polyimide fibers" refers to fibers containing 95 to 100 weight percent polyimide, based on the weight of the polyimide fibers. When the polyimide content is less than 100 weight percent, the balance is typically an additive that facilitates production or handling of the polyimide fibers, such as, for example, a spin finish on the surface of the polyimide fibers. The polyimide of the polyimide fibers is the same as the polyimide described above in the context of the nonwoven article. Methods of forming polyimide fibers are described, for example, in United States Patent Nos. 4,994,544 to Nagahiro et al., and 5,716,567 to Musina et al. Polyimide fibers are also commercially available as, for example, KURAKISSS™ polyimide fibers from Kuraray.

The aqueous suspension layer comprises the polyimide fibers in an amount of 35 to 65 weight percent, based on the total weight of reinforcing fibers, polyimide fibers, and binder fibers. Within this range, the polyimide fiber amount can be 40 to 60 weight percent.

The aqueous suspension layer further comprises binder fibers comprising a block polyestercarbonate-polysiloxane. The block polyestercarbonate-polysiloxane is the same as that described in the context of the nonwoven fabric. In some embodiments, the binder fibers comprise 90 to 100 weight percent of the block polyestercarbonate-polysiloxane, based on the weight of the binder fibers.

In a very specific embodiment, the block polyestercarbonate-polysiloxane comprises, based on total moles of carbonate and ester units in the block polyestercarbonate-polysiloxane, 70 to 90 mole percent of the resorcinol ester units, 5 to 15 mole percent of carbonate units wherein $R^1$ is 1,3-phenylene, and 5 to 15 mole percent of carbonate units wherein $R^1$ is 2,2-bis(1,4-phenylene)propane, and further comprises, based on the weight of the block polyestercarbonate-polysiloxane, 0.3 to 3 weight percent dimethylsiloxane units; the binder fibers further comprise an oligomeric aromatic phosphate ester; and the binder fibers comprise, based on the weight of the binder fibers, 90 to 98 weight percent of the block polyestercarbonate-polysiloxane, and 2 to 10 weight percent of the oligomeric aromatic phosphate ester.

The aqueous suspension layer comprises the binder fibers in an amount of 5 to 20 weight percent, based on the total weight of reinforcing fibers, polyimide fibers, and binder fibers. Within this range, the binder fiber amount can be 5 to 15 weight percent.

After the aqueous suspension layer is formed, the method comprises at least partially removing water from the aqueous suspension layer to form a fiber layer. Water can be removed by methods including gravity drainage through a screen on which the aqueous suspension layer can be formed, and passing the aqueous suspension layer through one or more sets of nip rollers.

After water is at least partially removed from the aqueous suspension layer, the method comprises exposing the fiber layer to a temperature of 250 to 400 °C, thereby melting the binder fibers, at least partially melting the polyimide fibers, and forming a nonwoven fabric. The temperature range of 250 to 400 °C is effective to melt the binder fibers and at least partially melt the polyimide fibers. Within this range, the temperature can be 260 to 350 °C, or 270-320 °C.

In some embodiments, the exposing the unconsolidated fiber layer to a temperature of 250 to 400 °C is conducted at a pressure of 40 to 400 kilopascals. Within this range, the pressure can be 50 to 200 kilopascals.

In some embodiments, the aqueous suspension layer and the fiber layer further comprise a viscosity modifying agent, and the method further comprises washing the fiber layer to at least partially remove the viscosity modifying agent.

In a very specific embodiment of the method, the aqueous suspension layer comprises 30 to 50 weight percent of the reinforcing fibers, 40 to 60 weight percent of the polyimide fibers, and 5 to 15 weight percent of the binder fibers; the aqueous suspension layer and the fiber layer further comprise a viscosity modifying agent; the method further comprises washing the fiber layer to at least partially remove the viscosity modifying agent; the reinforcing fibers comprise glass fibers; the polyimide fibers comprise a polyetherimide; the block polyestercarbonate-polysiloxane comprises, based on total moles of carbonate and ester units in the block polyestercarbonate-polysiloxane, 70 to 90 mole percent of the resorcinol ester units, 5 to 15 mole percent of carbonate units wherein $R^1$ is 1,3-phenylene, and 5 to 15 mole percent of carbonate units wherein $R^1$ is 2,2-bis(1,4-phenylene)propane, and further comprises, based on the weight of the block polyestercarbonate-polysiloxane, 0.3 to 3 weight percent dimethylsiloxane units; the binder fibers further comprise an oligomeric aromatic phosphate ester; the binder fibers comprise, based on the weight of the binder fibers, 90 to 98 weight percent of the block polyestercarbonate-polysiloxane, and 2 to 10 weight percent of the oligomeric aromatic phosphate ester; and the exposing the unconsolidated fiber layer to a temperature of 250 to 400 °C is conducted at a pressure of 40 to 400 kilopascals.

Another embodiment is a composite, comprising, based on the weight of the composite: 25 to 55 weight percent of reinforcing fibers, 35 to 65 weight percent of a polyimide, and 5 to 20 weight percent of a block polyestercarbonate-polysiloxane; wherein the block polyestercarbonate-polysiloxane comprises a polyester block comprising resorcinol ester units having the structure

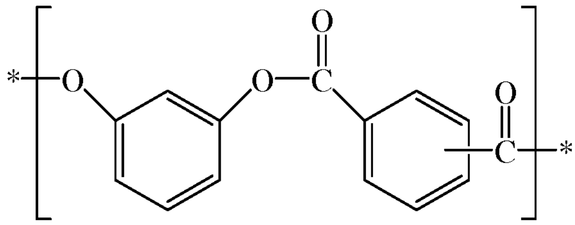
,

a polycarbonate block comprising carbonate units having the structure

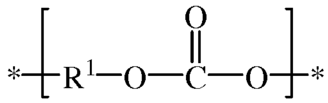

wherein at least 60 percent of the total number of $R^1$ groups are aromatic divalent groups, and a polysiloxane block comprising dimethylsiloxane units; wherein the block polyestercarbonate-polysiloxane comprises, based on total moles of carbonate and ester units, 30 to 90 mole percent of resorcinol ester, 5 to 35 mole percent of carbonate units wherein $R^1$ is 1,3-phenylene, and 5 to 35 mole percent of carbonate units wherein $R^1$ is 2,2-bis(1,4-phenylene)propane, and further comprises, based on the weight of the block polyestercarbonate-polysiloxane, 0.2 to 4 weight percent dimethylsiloxane units; and wherein the composite has a density of 0.92 to 1.38 gram/centimeter$^3$, and an areal density of 100 to 3000 gram/meter$^2$.

In some embodiments, the composite is prepared from multiple layers of the nonwoven fabric, with or without at least one scrim layer. The optional additional one or more scrim layer can include, for example, a woven glass scrim.

The composite comprises 25 to 55 weight percent of reinforcing fibers, based on the weight of the composite. Within this range, the amount of reinforcing fibers can be 30 to 50 weight percent. The reinforcing fibers are the same as those described in the context of the nonwoven fabric.

The composite further comprises 35 to 65 weight percent of a polyimide, based on the weight of the composite. Within this range, the amount of the polyimide can be 40 to 60 weight percent. The polyimide is the same as that described in the context of the nonwoven fabric.

The composite further comprises 5 to 20 weight percent of a block polyestercarbonate-polysiloxane, based on the weight of the composite. Within this range, the amount of block polyestercarbonate-polysiloxane can be 5 to 15 weight percent. The block polyestercarbonate-polysiloxane is the same as that described in the context of the nonwoven fabric.

In some embodiments of the composite, the block polyestercarbonate-polysiloxane comprises, based on total moles of carbonate and ester units, 70 to 90 mole percent of the resorcinol ester units, 5 to 15 mole percent of carbonate units wherein $R^1$ is 1,3-phenylene, and 5 to 15 mole percent of carbonate units wherein $R^1$ is 2,2-bis(1,4-phenylene)propane, and further comprises, based on the weight of the block polyestercarbonate-polysiloxane, 0.3 to 3 weight percent dimethylsiloxane units; and the composite further comprises 0.2 to 2 weight percent of an oligomeric aromatic phosphate ester flame retardant.

The composite has a density of 0.8 to 1.5 gram/centimeter$^3$. Density can be determined at 23 °C according to ASTM D792-13. Within the range of 0.8 to 1.5 gram/centimeter$^3$, the density can be 0.9 to 1.4 gram/centimeter$^3$, or 0.92 to 1.38 gram/centimeter$^3$.

The composite has an areal density of 100 to 3000 gram/meter$^2$. Areal density can be determined at 23 °C by weighing a 1.000 meter$^2$ section of fabric. Within the range of 100 to 3000 gram/meter$^2$, the areal density can be 200 to 2500 gram/meter$^2$, or 300 to 2200 gram/meter$^2$.

In a very specific embodiment of the composite, the composite comprises, based on the weight of the composite, 30 to 50 weight percent of the reinforcing fibers, and 40 to 60 weight percent of the polyimide, and 5 to 15 weight percent of the block polyestercarbonate-polysiloxane; the nonwoven fabric further comprises, based on the total weight of the nonwoven fabric, 0.3 to 3 weight percent of a flame retardant; wherein the reinforcing fibers comprise glass fibers; wherein the polyimide comprises a polyetherimide; the block polyestercarbonate-polysiloxane comprises, based on total moles of carbonate and ester units in the block polyestercarbonate-polysiloxane, 70 to 90 mole percent of the resorcinol

ester units, 5 to 15 mole percent of carbonate units wherein $R^1$ is 1,3-phenylene, and 5 to 15 mole percent of carbonate units wherein $R^1$ is 2,2-bis(1,4-phenylene)propane, and further comprises, based on the weight of the block polyestercarbonate-polysiloxane, 0.3 to 3 weight percent dimethylsiloxane units; and the flame retardant comprises an oligomeric aromatic phosphate ester.

Another embodiment is a method of forming a multilayer composite, the method comprising: exposing at least two layers of the nonwoven fabric in any of its above-described variations to a temperature of 250 to 400 °C and a pressure of 300 to 1,500 kilopascals for a time of 60 to 600 seconds to yield a multilayer composite.

Within the range of 250 to 400 °C, the temperature can be 350 to 400 °C.

Within the range of 300 to 1,500 kilopascals, the pressure can be 400 to 1,200 kilopascals, or 500 to 1000 kilopascals.

Within the range of 60 to 600 seconds, the time can be 80 to 300 seconds.

The invention includes at least the following embodiments.

Embodiment 1: A nonwoven fabric, comprising, based on the weight of the nonwoven fabric: 25 to 55 weight percent of reinforcing fibers, 35 to 65 weight percent of a polyimide, and 5 to 20 weight percent of a block polyestercarbonate-polysiloxane; wherein the block polyestercarbonate-polysiloxane comprises a polyester block comprising resorcinol ester units having the structure

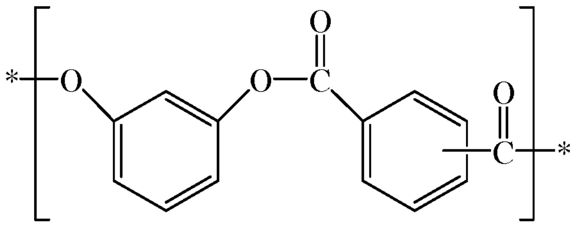

,

a polycarbonate block comprising carbonate units having the structure

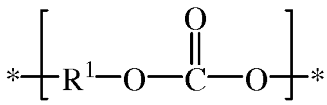

wherein at least 60 percent of the total number of $R^1$ groups are aromatic divalent groups, and a polysiloxane block comprising dimethylsiloxane units; wherein the block polyestercarbonate-polysiloxane comprises, based on total moles of carbonate and ester units, 30 to 90 mole percent of resorcinol ester, 5 to 35 mole percent of carbonate units wherein $R^1$ is 1,3-phenylene, and 5 to 35 mole percent of carbonate units wherein $R^1$ is 2,2-bis(1,4-phenylene)propane, and further comprises, based on the weight of the block polyestercarbonate-polysiloxane, 0.2 to 4 weight percent dimethylsiloxane units; wherein the nonwoven fabric has a density of 0.03 to 0.2 gram/centimeter$^3$, and an areal density of 100 to 400 gram/meter$^2$; and wherein the nonwoven fabric has a tensile modulus of 50 to 1000 megapascals, determined according to ASTM D638-14 at a temperature of 23 °C and using a test speed of 50 millimeters/minute.

Embodiment 2: The nonwoven fabric of embodiment 1, wherein the block polyestercarbonate-polysiloxane comprises, based on total moles of carbonate and ester units, 70 to 90 mole percent of the resorcinol ester units, 5 to 15 mole percent of carbonate units wherein $R^1$ is 1,3-phenylene, and 5 to 15 mole percent of carbonate units wherein $R^1$ is 2,2-bis(1,4-phenylene)propane, and further comprises, based on the weight of the block polyestercarbonate-polysiloxane, 0.3 to 3 weight percent dimethylsiloxane units; and wherein the nonwoven fabric further comprises 0.2 to 2 weight percent of an organophosphate ester flame retardant.

Embodiment 3: The nonwoven fabric of embodiment 2, wherein the organophosphate ester flame retardant comprises an oligomeric phosphate ester.

Embodiment 4: The nonwoven fabric of any one of embodiments 1-3, wherein the reinforcing fibers comprise glass fibers.

Embodiment 5: The nonwoven fabric of embodiment 1, wherein the nonwoven fabric comprises, based on the weight of the nonwoven fabric, 30 to 50 weight percent of the reinforcing fibers, 40 to 60 weight percent of the polyimide, and 5 to 15 weight percent of the block polyestercarbonate-polysiloxane; wherein the nonwoven fabric further comprises, based on the weight of the nonwoven fabric, 0.3 to 3 weight percent of a flame retardant; wherein the reinforcing fibers comprise glass fibers; wherein the polyimide comprises a polyetherimide; wherein the block polyestercarbonate-polysiloxane comprises, based on total moles of carbonate and ester units in the block polyestercarbonate-polysiloxane, 70 to 90 mole percent of the resorcinol ester units, 5 to 15 mole percent of carbonate units wherein $R^1$ is 1,3-phenylene, and 5 to 15 mole percent of carbonate units wherein $R^1$ is 2,2-bis(1,4-phenylene)propane, and further comprises, based on the weight of the block polyestercarbonate-polysiloxane, 0.3 to 3 weight percent dimethylsiloxane units; and wherein the flame retardant comprises an oligomeric phosphate ester.

Embodiment 6: A method of forming a nonwoven fabric, the method comprising: forming an aqueous suspension layer comprising water, 25 to 55 weight percent of reinforcing fibers, 35 to 65 weight percent of polyimide fibers, and 5 to 20 weight percent of binder fibers comprising a block polyestercarbonate-polysiloxane, wherein weight percent values are based on the total weight of reinforcing fibers, polyimide fibers, and binder fibers; at least partially removing water from the aqueous suspension layer to form a fiber layer; and exposing the fiber layer to a temperature of 250 to 320 °C, thereby melting the binder fibers, at least partially melting the polyimide fibers, and forming a nonwoven fabric; wherein the block polyestercarbonate-polysiloxane comprises a polyester block comprising resorcinol ester units having the structure

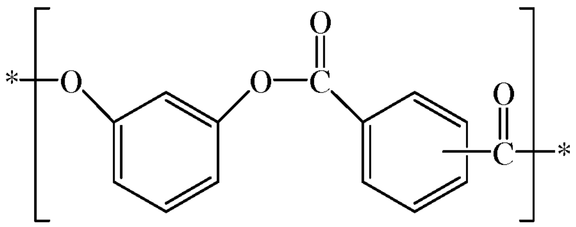

,

a polycarbonate block comprising carbonate units having the structure

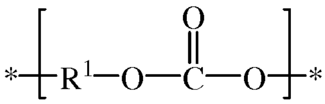

wherein at least 60 percent of the total number of $R^1$ groups are aromatic divalent groups, and a polysiloxane block comprising dimethylsiloxane units; wherein the block polyestercarbonate-polysiloxane comprises, based on total moles of carbonate and ester units, 30 to 90 mole percent of resorcinol ester, 5 to 35 mole percent of carbonate units wherein $R^1$ is 1,3-phenylene, and 5 to 35 mole percent of carbonate units wherein $R^1$ is 2,2-bis(1,4-phenylene)propane, and further comprises, based on the weight of the block polyestercarbonate-polysiloxane, 0.2 to 4 weight percent dimethylsiloxane units.

Embodiment 7: The method of embodiment 6, wherein the exposing the unconsolidated fiber layer to a temperature of 250 to 400 °C is conducted at a pressure of 40 to 400 kilopascals.

Embodiment 8: The method of embodiment 6 or 7, wherein the aqueous suspension layer and the fiber layer further comprise a viscosity modifying agent; and wherein the method further comprises washing the fiber layer to at least partially remove the viscosity modifying agent.

Embodiment 9: The method of any one of embodiments 6-8, wherein the block polyestercarbonate-polysiloxane comprises, based on total moles of carbonate and ester units in the block polyestercarbonate-polysiloxane, 70 to 90 mole percent of the resorcinol ester units, 5 to 15 mole percent of carbonate units wherein $R^1$ is 1,3-phenylene, and 5 to 15 mole percent of carbonate units wherein $R^1$ is 2,2-bis(1,4-phenylene)propane, and further comprises, based on the weight of the block polyestercarbonate-polysiloxane, 0.3 to 3 weight percent dimethylsiloxane units; wherein the binder fibers further comprise an oligomeric aromatic phosphate ester; and wherein the binder fibers comprise, based on the weight of the binder fibers, 90 to 98 weight percent of the block polyestercarbonate-polysiloxane, and 2 to 10 weight percent of the oligomeric aromatic phosphate ester.

Embodiment 10: The method of embodiment 6, wherein the aqueous suspension layer comprises 30 to 50 weight percent of the reinforcing fibers, 40 to 60 weight percent of the polyimide fibers, and 5 to 15 weight percent of the binder fibers; wherein the aqueous suspension layer and the fiber layer further comprise a viscosity modifying agent; wherein the method further comprises washing the fiber layer to at least partially remove the viscosity modifying agent; wherein the reinforcing fibers comprise glass fibers; wherein the polyimide fibers comprise a polyetherimide; wherein the block polyestercarbonate-polysiloxane comprises, based on total moles of carbonate and ester units in the block polyestercarbonate-polysiloxane, 70 to 90 mole percent of the resorcinol ester units, 5 to 15 mole percent of carbonate units wherein $R^1$ is 1,3-phenylene, and 5 to 15 mole percent of carbonate units wherein $R^1$ is 2,2-bis(1,4-phenylene)propane, and further comprises, based on the weight of the block polyestercarbonate-polysiloxane, 0.3 to 3 weight percent dimethylsiloxane units; wherein the binder fibers further comprise an oligomeric aromatic phosphate ester; wherein the binder fibers comprise, based on the weight of the binder fibers, 90 to 98 weight percent of the block polyestercarbonate-polysiloxane, and 2 to 10 weight percent of the oligomeric aromatic phosphate ester; and wherein the exposing the unconsolidated fiber layer to a temperature of 250 to 400 °C is conducted at a pressure of 40 to 400 kilopascals.

Embodiment 11: A composite, comprising, based on the weight of the composite: 25 to 55 weight percent of reinforcing fibers, 35 to 65 weight percent of a polyimide, and 5 to 20 weight percent of a block polyestercarbonate-polysiloxane; wherein the block polyestercarbonate-polysiloxane comprises a polyester block comprising resorcinol ester units having the structure

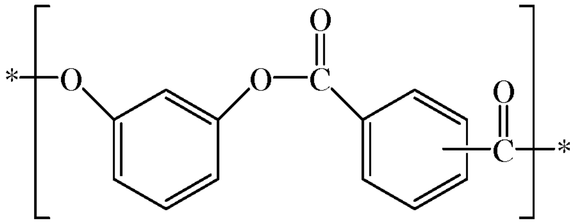

,

a polycarbonate block comprising carbonate units having the structure

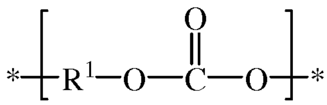

wherein at least 60 percent of the total number of $R^1$ groups are aromatic divalent groups, and a polysiloxane block comprising dimethylsiloxane units; wherein the block polyestercarbonate-polysiloxane comprises, based on total moles of carbonate and ester units, 30 to 90 mole percent of resorcinol ester, 5 to 35 mole percent of carbonate units wherein $R^1$ is 1,3-phenylene, and 5 to 35 mole percent of carbonate units wherein $R^1$ is 2,2-bis(1,4-phenylene)propane, and further comprises, based on the weight of the block polyestercarbonate-polysiloxane, 0.2 to 4 weight percent dimethylsiloxane units; and wherein the composite has a density of 0.92 to 1.38 gram/centimeter$^3$, and an areal density of 100 to 3000 gram/meter$^2$.

Embodiment 12: The composite of embodiment 11, wherein the block polyestercarbonate-polysiloxane comprises, based on total moles of carbonate and ester units, 70 to 90 mole percent of the resorcinol ester units, 5 to 15 mole percent of carbonate units wherein $R^1$ is 1,3-phenylene, and 5 to 15 mole percent of carbonate units wherein $R^1$ is 2,2-bis(1,4-phenylene)propane, and further comprises, based on the weight of the block polyestercarbonate-polysiloxane, 0.3 to 3 weight percent dimethylsiloxane units; and wherein the composite further comprises 0.2 to 2 weight percent of an oligomeric aromatic phosphate ester flame retardant.

Embodiment 13: The composite of embodiment 11, wherein the composite comprises, based on the weight of the composite, 30 to 50 weight percent of the reinforcing fibers, and 40 to 60 weight percent of the polyimide, and 5 to 15 weight percent of the block polyestercarbonate-polysiloxane; wherein the nonwoven fabric further comprises, based on the total weight of the nonwoven fabric, 0.3 to 3 weight percent of a flame retardant; wherein the reinforcing fibers comprise glass fibers; wherein the polyimide comprises a polyetherimide; wherein the block polyestercarbonate-polysiloxane comprises, based on total moles of carbonate and ester units in the block polyestercarbonate-polysiloxane, 70 to 90 mole percent of the resorcinol ester units, 5 to 15 mole percent of carbonate units wherein $R^1$ is 1,3-phenylene, and 5 to 15 mole percent of carbonate units wherein $R^1$ is 2,2-bis(1,4-phenylene)propane, and further comprises, based on the weight of the block polyestercarbonate-polysiloxane, 0.3 to 3 weight percent dimethylsiloxane units; and wherein the flame retardant comprises an oligomeric aromatic phosphate ester.

Embodiment 14: A method of forming a multilayer composite, the method comprising: exposing at least two layers of the nonwoven fabric of any one of embodiments 1-5 to a temperature of 250 to 400 °C and a pressure of 300 to 1,500 kilopascals for a time of 60 to 600 seconds to yield a multilayer composite.

All ranges disclosed herein are inclusive of the endpoints, and the endpoints are independently combinable with each other. Each range disclosed herein constitutes a disclosure of any point or sub-range lying within the disclosed range.

The invention is further illustrated by the following non-limiting examples.

EXAMPLES

Materials used in these examples are summarized in Table 1.

Table 1

| Component | Description |
|---|---|
| GF | Glass fibers, having a diameter of about 16 micrometers, and a length of about 12 millimeters; obtained as OPTIFLOW™ 790C from Owens Corning. |
| PEIF | Polyetherimide fibers, 8 denier per filament with a fiber length of about 12 millimeters; obtained as KURAKISSS™ UP801 8.8 dtex × 12 mm from Kuraray. |
| PEC-Si | para-Cumylphenol endcapped block polyestercarbonate-polysiloxane with about 99 weight percent total of polyester blocks and polycarbonate blocks, and about 1 weight percent polysiloxane blocks; the polyestercarbonate portion contains about 80 mole percent 1,3-phenylene isophthalate-co-terephthalate units, about 9 mole percent resorcinol carbonate units, and about 11 mole percent bisphenol A carbonate units; the polysiloxane blocks have, on average, about 10 dimethylsiloxane units per block; the polyestercarbonate-polysiloxane has a weight average molecular weight of about 24,500 grams/mole and is preparable by the procedure of Example 2-14 of Method 2 as described in US Patent No. 7,790,292 B2 to Colburn et al., except that the p-cumylphenol level was adjusted to achieve a weight average molecular weight of about 24,500 grams/mole. |
| OPE | Oligomeric phosphate ester flame retardant; obtained in powder form as FYROLFLEX SOL-DP flame retardant from ICL Industrial Products. |
| TBPDP | Tetrakis(2,4-di-tert-butylphenyl)4,4'-biphenyldiphosphonite, CAS Reg. No. 119345-01-6; obtained as IRGAFOS™ P-EPQ from BASF. |

The composition used to prepare block polyestercarbonate-polysiloxane containing fibers (PEC-Si fibers) is summarized in Table 2, where component amounts are expressed in weight percent based on the total weight of the composition. The composition was prepared by dry blending all components and adding the resulting mixture to the feed throat of a twin-screw extruder operating with zone temperatures ranging from 230 to 300 °C. The extrudate was cooled in water before being pelletized.

Table 2

| Component | Amount |
|---|---|
| PEC-Si | 93.44 |
| OPE | 6.50 |
| TBPDP | 0.06 |

Pellets were dried at 80 to 120 °C for 6 to 12 hours before being fed to the hopper of a melt spinning apparatus. The melt spinning apparatus is schematically illustrated in Figure 1, where melt spinning apparatus **1** comprises extruder **5,** in which dried pellets are converted to a melt, melt pump **10,** which conveys the melt to spin pack **15,** where it is filtered, then to spinneret **20,** where multiple fibers are formed from the filtered melt. The fibers are immediately conveyed to quench section **30,** where they are air-cooled and solidified. The cooled fibers then enter spin finish section **40,** where a spin finish can be applied to the surface of the fibers. The fibers then traverse a sequence of godet pairs comprising first godets **50,** second godets **60,** and third godets **70,** where the fibers are drawn (stretched). The fibers then enter winder section **80,** where contact roller **90** facilitates formation of wound fiber **100** around one of two winding cores **110.**

In these experiments, the melt pump was operated at 10 centimeter$^3$/revolution. Extruder and melt pump temperatures were 280 to 330 °C. A 144-hole, single-position spinneret was used. Spinneret holes (nozzles) were circular with a diameter of 0.8 millimeters. The length-to-diameter ratio of each spinneret was 4:1. A 325 U.S. mesh (44 micrometer opening) screen filter was used in the spinpack for filtration of the composition melt. After fibers exited the nozzles, they were solidified by quenching with air at ambient temperature (about 23 °C). Individual filaments were combined to form multi-filament threads, then a spin finish (an acrylamide copolymer in an oil-in-water emulsion, obtained as LUROL™ PS-11744 from Goulston) was applied to the multi-filament threads before they contacted the first godet. The draw down ratio was 280 to 550. Draw down ratio, which is unitless, is defined as the ratio of speed (in meters/minute) at which the

melt exits the spinneret nozzles to the speed (in meters/minute) of the fiber at the first godet. The apparent shear rate was 170 to 1700 $second^{-1}$. Apparent shear rate (in units of $second^{-1}$) is defined according to the equation

$$\text{Apparent shear rate (second}^{-1}) = 4Q/\pi R^3 \rho$$

wherein $Q$ is the melt throughput per spinneret nozzle (in grams/second), $R$ is the nozzle radius (in centimeters), and $\rho$ is the polymer melt density (in $grams/centimeter^3$). The mechanical draw ratio was 0.95 to 1.2. Mechanical draw ratio, which is unitless, is defined as the ratio of the first godet speed (in meters/minute) to the winder speed (in meters/minute). The resulting threads, containing fibers of 8 denier per filament, were chopped to a length of about 12 millimeters for use in preparation of a nonwoven fabric.

Formation of Nonwoven Fabric. A mixture of polyetherimide fibers (50 weight percent), PEC-Si fibers (10 weight percent), and chopped glass fibers (40 weight percent) was used to prepare a nonwoven fabric via a wet-laid papermaking) process. Figure 2 is a schematic illustration of a papermaking apparatus **200,** which includes mixing tank **210,** run tank **220,** headbox **230,** wire former **240,** dryer **250,** and winder **260.** A fiber dispersion was prepared by dispersing 200 kilograms total of the three ingredient fibers in 200 kilograms of an aqueous solution containing a viscosity modifying agent. The viscosity modifying agent was a poly(acrylamide-co-diallyldimethylammonium chloride) solution, 10 weight percent in water, and it was used in an amount effective to provide the aqueous solution with a viscosity of 50 to 200 centipoise. The fiber dispersion was fed onto the wire mesh of a paper-making machine to form an aqueous suspension layer, and aqueous solution was drained to form a fiber layer. The fiber layer was transferred to a water washing section where viscosity modifier was washed from the fiber layer. The washed fiber layer was then transferred to a tunnel dryer, and finally to a winding section. Water was essentially eliminated from the mat by the sequence of gravity drainage through holes in the wire mesh, squeezing through several pairs of nip rollers, and heating in an ambient-pressure tunnel dryer, where the temperature was set to 280-300 °C and the drier residence time was 120-180 seconds. In this temperature range, the PEC-Si fibers melted and the polyetherimide fibers at least partially melted. Both types of fibers flowed, losing their fiber shape. If the tunnel dryer temperature is less than 280 °C, web tearing occurs. If it is less than 220 °C, not only is there web tearing, but the binder (PEC-Si) fibers do not get fully activated, leading to a weak and locally torn fabric. This stage is referred to as binder activation, because the binder fibers melt, and the melted PEC-Si copolymer flows within the web to bind together the network of glass and polyetherimide fibers. This gives the network enough mechanical integrity to prevent it from falling apart in subsequent processing and handling. Using the above process steps, a 165 $gram/meter^2$ nonwoven fabric web was produced at a speed of 5 meters/minute. The nonwoven fabric web was wound on a core. When the roll was fully wound, the edges were trimmed to meet the target width, and the nonwoven fabric web was rewound to a new core.

As a comparison, a 325 $gram/meter^2$ non-consolidated nonwoven fabric was produced from the same fiber mix (40% glass fiber, 50% polyetherimide fiber, and 10% PEC-Si fiber) and the same process, except that the fiber dispersion did not include a viscosity modifier, there was no water washing step, and the dryer temperature was 200 °C.

Tensile properties for the 165 $gram/meter^2$ nonwoven fabric and the 325 $gram/meter^2$ non-consolidated nonwoven fabric were determined according to ASTM D638-14 at 23 °C using a test speed of 50 millimeters/second. The 165 $gram/meter^2$ nonwoven fabric exhibited a tensile modulus of 293 megapascals, and a tensile strain at break of 1.6 percent. The 325 $gram/meter^2$ non-consolidated nonwoven fabric exhibited a tensile modulus of 16 megapascals, and a tensile strain at break of 4.5 percent.

Figure 3 provides images of rolls of (a) 325 $gram/meter^2$ non-consolidated nonwoven fabric, and (b) 165 $gram/meter^2$ nonwoven fabric. Note that the stiffer pre-consolidated nonwoven fabric assumes an essentially planar shape when unwound from the roll, while the less stiff non-consolidated nonwoven fabric hangs limply. The greater stiffness of the pre-consolidated nonwoven fabric provides advantages including ease of trimming, ease of shearing into complex shapes, shape retention without underlying support.

Additional advantages of the pre-consolidated nonwoven fabric relative to the non-consolidated nonwoven fabric are that it surrounds the reinforcing fibers with more resin, and that it has smoother and more uniform surfaces. Both of these advantages contribute to less fiber shedding during nonwoven fabric handling. Figure 4 provides optical micrographs of (a) 325 $gram/meter^2$ non-consolidated nonwoven fabric, and (b) 165 $gram/meter^2$ pre-consolidated nonwoven fabric. These micrographs show that the pre-consolidated nonwoven fabric surrounds the reinforcing fibers with more resin than the non-consolidated nonwoven fabric. Figure 5 provides surface profiles, derived from optical micrographs, of (a) 325 $gram/meter^2$ non-consolidated nonwoven nonwoven fabric, and (b) 165 $gram/meter^2$ nonwoven fabric. These surface profiles show that the pre-consolidated nonwoven fabric has smoother and more uniform surfaces than the non-consolidated nonwoven fabric.

The nonwoven fabric was used to form a consolidated multi-layer composite suitable for thermoforming. Seven or eight layers of the 165 $gram/meter^2$ pre-consolidated nonwoven fabric were unwound from independently operating

pay-off winders, stacked one over another, then topped with one layer of 10-20 gram/meter$^2$ glass fiber woven fabric scrim obtained as BGF 104 from BGF Industries (Greensboro, North Carolina, USA). The combined layers were then passed through a consolidation apparatus. The consolidation apparatus was a steel double belt press obtained as Heather 5 from HELD Technologie GmbH (Trossingen, Germany). The nonwoven web was exposed to radiation from an infrared pre-heating device before it was fed to the double-belt press. The double-belt press consolidation simultaneously compressed the nonwoven fabrics and caused the polyetherimide fibers to melt and flow. A mold release agent, LOCTITE™ FREKOTE™ 700-NC from Henkel, was continuously applied to the steel belts to prevent sticking of the nonwoven webs to the steel belts. Typical consolidation conditions were 180 to 300 seconds at a temperature of 350 to 400 °C, and a pressure of 800 kilopascals. Consolidation was followed by cooling while maintaining pressure. The cooled, consolidated composite had a continuous resin matrix containing strained glass fibers. The strained glass fibers release their residual stress and create "lofting" during a subsequent thermoforming process. The mass per unit area of the consolidated mat was 1,155 grams/meter$^2$ for the seven-layer composite, and 1,320 grams/meter$^2$ for the eight-layer composite. The thickness of the consolidated composite was 1.05 millimeters for a seven-layer composite, and 1.20 millimeters for the eight-layer composite. The width of the consolidated panel is variable and can be controlled, for example, using an in-line edge trimmer. The length of the consolidated panel is variable and can be controlled, for example, using a guillotine cutter on the consolidation apparatus.

## Claims

**1.** A nonwoven fabric, comprising, based on the weight of the nonwoven fabric:

25 to 55 weight percent of reinforcing fibers,
35 to 65 weight percent of a polyimide, and
5 to 20 weight percent of a block polyestercarbonate-polysiloxane;
wherein the block polyestercarbonate-polysiloxane comprises a polyester block comprising resorcinol ester units having the structure

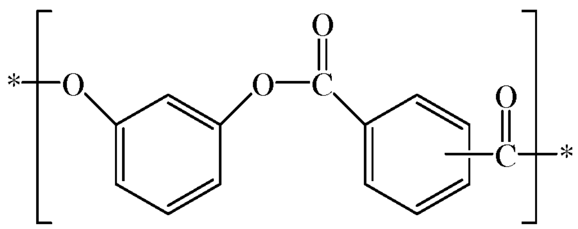

,

a polycarbonate block comprising carbonate units having the structure

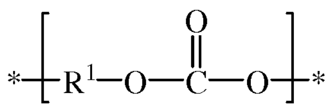

wherein at least 60 percent of the total number of $R^1$ groups are aromatic divalent groups, and a polysiloxane block comprising dimethylsiloxane units; wherein the block polyestercarbonate-polysiloxane comprises, based on total moles of carbonate and ester units, 30 to 90 mole percent of resorcinol ester, 5 to 35 mole percent of carbonate units wherein $R^1$ is 1,3-phenylene, and 5 to 35 mole percent of carbonate units wherein $R^1$ is 2,2-bis(1,4-phenylene)propane, and further comprises, based on the weight of the block polyestercarbonate-polysiloxane, 0.2 to 4 weight percent dimethylsiloxane units;
wherein the nonwoven fabric has

a density of 0.03 to 0.2 gram/centimeter$^3$, and
an areal density of 100 to 400 gram/meter$^2$; and

wherein the nonwoven fabric has a tensile modulus of 50 to 1000 megapascals, determined according to ASTM D638-14 at a temperature of 23 °C and using a test speed of 50 millimeters/minute.

2. The nonwoven fabric of claim 1,
wherein the block polyestercarbonate-polysiloxane comprises, based on total moles of carbonate and ester units, 70 to 90 mole percent of the resorcinol ester units, 5 to 15 mole percent of carbonate units wherein $R^1$ is 1,3-phenylene, and 5 to 15 mole percent of carbonate units wherein $R^1$ is 2,2-bis(1,4-phenylene)propane, and further comprises, based on the weight of the block polyestercarbonate-polysiloxane, 0.3 to 3 weight percent dimethylsiloxane units; and
wherein the nonwoven fabric further comprises 0.2 to 2 weight percent of an organophosphate ester flame retardant.

3. The nonwoven fabric of claim 2, wherein the organophosphate ester flame retardant comprises an oligomeric phosphate ester.

4. The nonwoven fabric of any one of claims 1-3, wherein the reinforcing fibers comprise glass fibers.

5. The nonwoven fabric of claim 1,
wherein the nonwoven fabric comprises, based on the weight of the nonwoven fabric,

30 to 50 weight percent of the reinforcing fibers,
40 to 60 weight percent of the polyimide, and
5 to 15 weight percent of the block polyestercarbonate-polysiloxane;

wherein the nonwoven fabric further comprises, based on the weight of the nonwoven fabric, 0.3 to 3 weight percent of a flame retardant;
wherein the reinforcing fibers comprise glass fibers;
wherein the polyimide comprises a polyetherimide;
wherein the block polyestercarbonate-polysiloxane comprises, based on total moles of carbonate and ester units in the block polyestercarbonate-polysiloxane, 70 to 90 mole percent of the resorcinol ester units, 5 to 15 mole percent of carbonate units wherein $R^1$ is 1,3-phenylene, and 5 to 15 mole percent of carbonate units wherein $R^1$ is 2,2-bis(1,4-phenylene)propane, and further comprises, based on the weight of the block polyestercarbonate-polysiloxane, 0.3 to 3 weight percent dimethylsiloxane units; and
wherein the flame retardant comprises an oligomeric phosphate ester.

6. A method of forming a nonwoven fabric, the method comprising:

forming an aqueous suspension layer comprising

water,
25 to 55 weight percent of reinforcing fibers,
35 to 65 weight percent of polyimide fibers, and
5 to 20 weight percent of binder fibers comprising a block polyestercarbonate-polysiloxane,
wherein weight percent values are based on the total weight of reinforcing fibers, polyimide fibers, and binder fibers;

at least partially removing water from the aqueous suspension layer to form a fiber layer; and
exposing the fiber layer to a temperature of 250 to 320 °C, thereby melting the binder fibers, at least partially melting the polyimide fibers, and forming a nonwoven fabric;
wherein the block polyestercarbonate-polysiloxane comprises a polyester block comprising resorcinol ester units having the structure

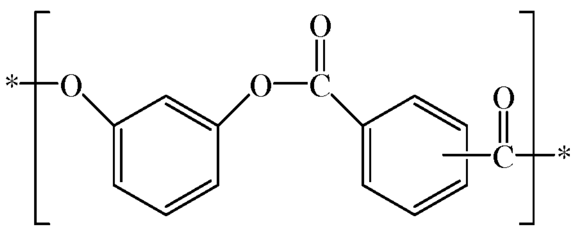

,

a polycarbonate block comprising carbonate units having the structure

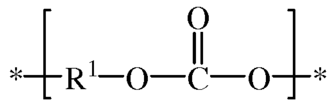

wherein at least 60 percent of the total number of $R^1$ groups are aromatic divalent groups, and a polysiloxane block comprising dimethylsiloxane units; wherein the block polyestercarbonate-polysiloxane comprises, based on total moles of carbonate and ester units, 30 to 90 mole percent of resorcinol ester, 5 to 35 mole percent of carbonate units wherein $R^1$ is 1,3-phenylene, and 5 to 35 mole percent of carbonate units wherein $R^1$ is 2,2-bis(1,4-phenylene)propane, and further comprises, based on the weight of the block polyestercarbonate-polysiloxane, 0.2 to 4 weight percent dimethylsiloxane units.

**7.** The method of claim 6, wherein the exposing the unconsolidated fiber layer to a temperature of 250 to 400 °C is conducted at a pressure of 40 to 400 kilopascals.

**8.** The method of claim 6 or 7,
wherein the aqueous suspension layer and the fiber layer further comprise a viscosity modifying agent; and
wherein the method further comprises washing the fiber layer to at least partially remove the viscosity modifying agent.

**9.** The method of any one of claims 6-8,
wherein the block polyestercarbonate-polysiloxane comprises, based on total moles of carbonate and ester units in the block polyestercarbonate-polysiloxane, 70 to 90 mole percent of the resorcinol ester units, 5 to 15 mole percent of carbonate units wherein $R^1$ is 1,3-phenylene, and 5 to 15 mole percent of carbonate units wherein $R^1$ is 2,2-bis(1,4-phenylene)propane, and further comprises, based on the weight of the block polyestercarbonate-polysiloxane, 0.3 to 3 weight percent dimethylsiloxane units;
wherein the binder fibers further comprise an oligomeric aromatic phosphate ester; and
wherein the binder fibers comprise, based on the weight of the binder fibers,

90 to 98 weight percent of the block polyestercarbonate-polysiloxane, and
2 to 10 weight percent of the oligomeric aromatic phosphate ester.

**10.** The method of claim 6,
wherein the aqueous suspension layer comprises

30 to 50 weight percent of the reinforcing fibers,
40 to 60 weight percent of the polyimide fibers, and
5 to 15 weight percent of the binder fibers;

wherein the aqueous suspension layer and the fiber layer further comprise a viscosity modifying agent;
wherein the method further comprises washing the fiber layer to at least partially remove the viscosity modifying agent;
wherein the reinforcing fibers comprise glass fibers;
wherein the polyimide fibers comprise a polyetherimide;
wherein the block polyestercarbonate-polysiloxane comprises, based on total moles of carbonate and ester units in the block polyestercarbonate-polysiloxane, 70 to 90 mole percent of the resorcinol ester units, 5 to 15 mole percent of carbonate units wherein $R^1$ is 1,3-phenylene, and 5 to 15 mole percent of carbonate units wherein $R^1$ is 2,2-bis(1,4-phenylene)propane, and further comprises, based on the weight of the block polyestercarbonate-polysiloxane, 0.3 to 3 weight percent dimethylsiloxane units;
wherein the binder fibers further comprise an oligomeric aromatic phosphate ester;
wherein the binder fibers comprise, based on the weight of the binder fibers,

90 to 98 weight percent of the block polyestercarbonate-polysiloxane, and
2 to 10 weight percent of the oligomeric aromatic phosphate ester; and

wherein the exposing the unconsolidated fiber layer to a temperature of 250 to 400 °C is conducted at a pressure of 40 to 400 kilopascals.

**11.** A composite, comprising, based on the weight of the composite:

25 to 55 weight percent of reinforcing fibers,
35 to 65 weight percent of a polyimide, and
5 to 20 weight percent of a block polyestercarbonate-polysiloxane;
wherein the block polyestercarbonate-polysiloxane comprises a polyester block comprising resorcinol ester units having the structure

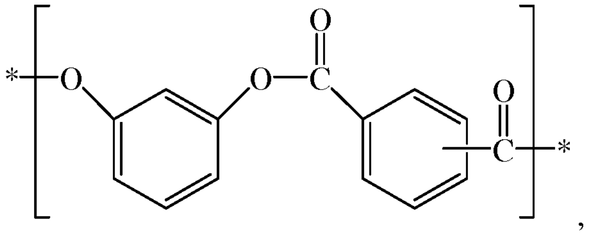

a polycarbonate block comprising carbonate units having the structure

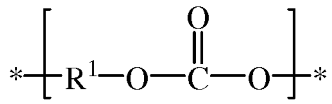

wherein at least 60 percent of the total number of $R^1$ groups are aromatic divalent groups, and a polysiloxane block comprising dimethylsiloxane units; wherein the block polyestercarbonate-polysiloxane comprises, based on total moles of carbonate and ester units, 30 to 90 mole percent of resorcinol ester, 5 to 35 mole percent of carbonate units wherein $R^1$ is 1,3-phenylene, and 5 to 35 mole percent of carbonate units wherein $R^1$ is 2,2-bis(1,4-phenylene)propane, and further comprises, based on the weight of the block polyestercarbonate-polysiloxane, 0.2 to 4 weight percent dimethylsiloxane units; and
wherein the composite has

a density of 0.92 to 1.38 gram/centimeter$^3$, and
an areal density of 100 to 3000 gram/meter$^2$.

**12.** The composite of claim 11,
wherein the block polyestercarbonate-polysiloxane comprises, based on total moles of carbonate and ester units, 70 to 90 mole percent of the resorcinol ester units, 5 to 15 mole percent of carbonate units wherein $R^1$ is 1,3-phenylene, and 5 to 15 mole percent of carbonate units wherein $R^1$ is 2,2-bis(1,4-phenylene)propane, and further comprises, based on the weight of the block polyestercarbonate-polysiloxane, 0.3 to 3 weight percent dimethylsiloxane units; and
wherein the composite further comprises 0.2 to 2 weight percent of an oligomeric aromatic phosphate ester flame retardant.

**13.** The composite of claim 11,
wherein the composite comprises, based on the weight of the composite,

30 to 50 weight percent of the reinforcing fibers, and
40 to 60 weight percent of the polyimide, and
5 to 15 weight percent of the block polyestercarbonate-polysiloxane;

wherein the nonwoven fabric further comprises, based on the total weight of the nonwoven fabric, 0.3 to 3 weight percent of a flame retardant;
wherein the reinforcing fibers comprise glass fibers;
wherein the polyimide comprises a polyetherimide;
wherein the block polyestercarbonate-polysiloxane comprises, based on total moles of carbonate and ester units in the block polyestercarbonate-polysiloxane, 70 to 90 mole percent of the resorcinol ester units, 5 to 15 mole percent of carbonate units wherein $R^1$ is 1,3-phenylene, and 5 to 15 mole percent of carbonate units wherein $R^1$ is 2,2-bis(1,4-phenylene)propane, and further comprises, based on the weight of the block polyestercarbonate-polysiloxane, 0.3 to 3 weight percent dimethylsiloxane units; and

wherein the flame retardant comprises an oligomeric aromatic phosphate ester.

**14.** A method of forming a multilayer composite, the method comprising:
exposing at least two layers of the nonwoven fabric of any one of claims 1-5 to a temperature of 250 to 400 °C and a pressure of 300 to 1,500 kilopascals for a time of 60 to 600 seconds to yield a multilayer composite.

**Patentansprüche**

**1.** Ein Vliesstoff, der, basierend auf dem Gewicht des Vliesstoffs, Folgendes umfasst:

25 bis 55 Gewichtsprozent Verstärkungsfasern,
35 bis 65 Gewichtsprozent eines Polyimids und
5 bis 20 Gewichtsprozent eines Block-Polyestercarbonat-Polysiloxans,
wobei das Block-Polyestercarbonat-Polysiloxan einen Polyesterblock umfasst, der Resorcinolestereinheiten mit folgender Struktur umfasst:

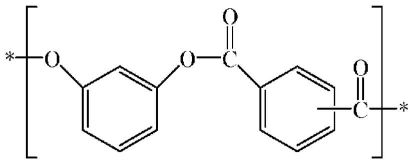

,

einen Polycarbonatblock, der Carbonateinheiten mit folgender Struktur umfasst:

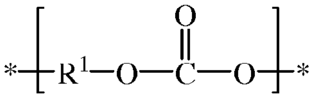

,

worin mindestens 60% der Gesamtzahl an $R^1$-Gruppen aromatische zweiwertige Gruppen sind; und einen Polysiloxanblock, der Dimethylsiloxaneinheiten umfasst; wobei das Block-Polyestercarbonat-Polysiloxan, basierend auf den Gesamtmol der Carbonat- und Estereinheiten, 30 bis 90 Molprozent Resorcinolester, 5 bis 35 Molprozent Carbonateinheiten, wobei $R^1$ 1,3-Phenylen ist, und 5 bis 35 Molprozent Carbonateinheiten, wobei $R^1$ 2,2-bis(1,4-Phenylen)propan ist, und weiter, basierend auf dem Gewicht des Block-Polyestercarbonat-Polysiloxans, 0,2 bis 4 Gewichtsprozent Dimethylsiloxaneinheiten umfasst;
wobei der Vliesstoff Folgendes hat:
eine Dichte von 0,03 bis 0,2 Gramm/Kubikzentimeter und
eine Flächendichte von 100 bis 400 Gramm/Quadratmeter; und
wobei der Vliesstoff einen Zugmodul von 50 bis 1000 Megapascal hat, bestimmt nach ASTM D638-14 bei einer Temperatur von 23°C und mit einer Testgeschwindigkeit von 50 Millimetern/Minute.

**2.** Der Vliesstoff gemäß Anspruch 1,
wobei das Block-Polyestercarbonat-Polysiloxan, basierend auf den Gesamtmol der Carbonat- und Estereinheiten, 70 bis 90 Molprozent der Resorcinolestereinheiten, 5 bis 15 Molprozent Carbonateinheiten, wobei $R^1$ 1,3-Phenylen ist, und 5 bis 15 Molprozent Carbonateinheiten, wobei $R^1$ 2,2-bis(1,4-Phenylen)propan ist, und weiter, basierend auf dem Gewicht des Block-Polyestercarbonat-Polysiloxans, 0,3 bis 3 Gewichtsprozent Dimethylsiloxaneinheiten umfasst; und
wobei der Vliesstoff weiter 0,2 bis 2 Gewichtsprozent eines Organophosphatester-Flammverzögerungsmittels umfasst.

**3.** Der Vliesstoff gemäß Anspruch 2, wobei das Organophosphatester-Flammverzögerungsmittel einen oligomeren Phosphatester umfasst.

**4.** Der Vliesstoff gemäß einem beliebigen der Ansprüche 1-3, wobei die Verstärkungsfasern Glasfasern umfassen.

**5.** Der Vliesstoff gemäß Anspruch 1,

wobei der Vliesstoff, basierend auf dem Gewicht des Vliesstoffs, Folgendes umfasst:

30 bis 50 Gewichtsprozent der Verstärkungsfasern,
40 bis 60 Gewichtsprozent des Polyimids und
5 bis 15 Gewichtsprozent des Block-Polyestercarbonat-Polysiloxans;
wobei der Vliesstoff weiter, basierend auf dem Gewicht des Vliesstoffs, 0,3 bis 3 Gewichtsprozent eines Flammverzögerungsmittels umfasst;
wobei die Verstärkungsfasern Glasfasern umfassen;
wobei das Polyimid ein Polyetherimid umfasst;
wobei das Block-Polyestercarbonat-Polysiloxan, basierend auf den Gesamtmol der Carbonat- und Estereinheiten im Block-Polyestercarbonat-Polysiloxan, 70 bis 90 Molprozent der Resorcinolestereinheiten, 5 bis 15 Molprozent Carbonateinheiten, wobei $R^1$ 1,3-Phenylen ist, und 5 bis 15 Molprozent Carbonateinheiten, wobei $R^1$ 2,2-bis(1,4-Phenylen)propan ist, und weiter, basierend auf dem Gewicht des Block-Polyestercarbonat-Polysiloxans, 0,3 bis 3 Gewichtsprozent Dimethylsiloxaneinheiten umfasst; und
wobei das Flammverzögerungsmittel einen oligomeren Phosphatester umfasst.

**6.** Ein Verfahren zum Formen eines Vliesstoffs, das Folgendes umfasst:
das Formen einer wässerigen Suspensionsschicht, die Folgendes umfasst:
Wasser,

25 bis 55 Gewichtsprozent Verstärkungsfasern,
35 bis 65 Gewichtsprozent Polyimidfasern und
5 bis 20 Gewichtsprozent Binderfasern, die ein Block-Polyestercarbonat-Polysiloxan umfassen,
wobei die Gewichtsprozentwerte auf dem Gesamtgewicht der Verstärkungsfasern, der Polyimidfasern und der Binderfasern basieren;
das zumindest partielle Entfernen von Wasser aus der wässerigen Suspensionsschicht, um eine Faserschicht zu bilden; und
das Aussetzen der Faserschicht gegenüber einer Temperatur von 250 bis 320°C, wodurch die Binderfasern geschmolzen, die Polyimidfasern zumindest teilweise geschmolzen und ein Vliesstoff geformt wird;
wobei das Block-Polyestercarbonat-Polysiloxan einen Polyesterblock umfasst, der Resorcinolestereinheiten mit folgender Struktur umfasst:

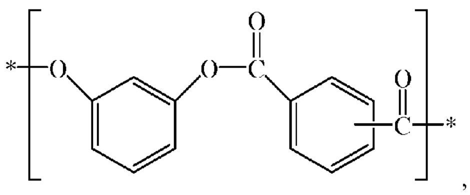

einen Polycarbonatblock, der Carbonateinheiten mit folgender Struktur umfasst:

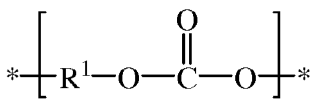

worin mindestens 60% der Gesamtzahl von $R^1$-Gruppen aromatische zweiwertige Gruppen sind; und einen Polysiloxanblock, der Dimethylsiloxaneinheiten umfasst; wobei das Block-Polyestercarbonat-Polysiloxan, basierend auf den Gesamtmol der Carbonat- und Estereinheiten, 30 bis 90 Molprozent Resorcinolester, 5 bis 35 Molprozent Carbonateinheiten, wobei $R^1$ 1,3-Phenylen ist, und 5 bis 35 Molprozent Carbonateinheiten, wobei $R^1$ 2,2-bis(1,4-Phenylen)propan ist, und weiter, basierend auf dem Gewicht des Block-Polyestercarbonat-Polysiloxans, 0,2 bis 4 Gewichtsprozent Dimethylsiloxaneinheiten umfasst.

**7.** Das Verfahren gemäß Anspruch 6, wobei das Aussetzen der unverfestigten Faserschicht gegenüber einer Temperatur von 250 bis 400°C bei einem Druck von 40 bis 400 Kilopascal durchgeführt wird.

**8.** Das Verfahren gemäß Anspruch 6 oder 7,

wobei die wässerige Suspensionsschicht und die Faserschicht weiter ein Viskositätsmodifikationsmittel umfassen und

wobei das Verfahren weiter das Waschen der Faserschicht, um das Viskositätsmodifikationsmittel zumindest teilweise zu entfernen, umfasst.

**9.** Das Verfahren gemäß einem beliebigen der Ansprüche 6-8,
wobei das Block-Polyestercarbonat-Polysiloxan, basierend auf den Gesamtmol der Carbonat- und Estereinheiten im Block-Polyestercarbonat-Polysiloxan, 70 bis 90 Molprozent der Resorcinolestereinheiten, 5 bis 15 Molprozent Carbonateinheiten, wobei $R^1$ 1,3-Phenylen ist, und 5 bis 15 Molprozent Carbonateinheiten, wobei $R^1$ 2,2-bis(1,4-Phenylen)propan ist, und weiter, basierend auf dem Gewicht des Block-Polyestercarbonat-Polysiloxans, 0,3 bis 3 Gewichtsprozent Dimethylsiloxaneinheiten umfasst;
wobei die Binderfasern weiter einen oligomeren aromatischen Phosphatester umfassen und
wobei die Binderfasern, basierend auf dem Gewicht der Binderfasern,
90 bis 98 Gewichtsprozent des Block-Polyestercarbonat-Polysiloxans und
2 bis 10 Gewichtsprozent des oligomeren aromatischen Phosphatesters umfassen.

**10.** Das Verfahren gemäß Anspruch 6,
wobei die wässerige Suspensionsschicht Folgendes umfasst:
30 bis 50 Gewichtsprozent der Verstärkungsfasern,
40 bis 60 Gewichtsprozent der Polyimidfasern und
5 bis 15 Gewichtsprozent der Binderfasern;
wobei die wässerige Suspensionsschicht und die Faserschicht weiter ein Viskositätsmodifikationsmittel umfassen;
wobei das Verfahren weiter das Waschen der Faserschicht, um das Viskositätsmodifikationsmittel mindestens teilweise zu entfernen, umfasst;
wobei die Verstärkungsfasern Glasfasern umfassen;
wobei die Polyimidfasern ein Polyetherimid umfassen;
wobei das Block-Polyestercarbonat-Polysiloxan, basierend auf den Gesamtmol von Carbonat- und Estereinheiten im Block-Polyestercarbonat-Polysiloxan, 70 bis 90 Molprozent der Resorcinolestereinheiten, 5 bis 15 Molprozent Carbonateinheiten, wobei $R^1$ 1,3-Phenylen ist, und 5 bis 15 Molprozent Carbonateinheiten, wobei $R^1$ 2,2-bis(1,4-Phenylen)propan ist; und weiter, basierend auf dem Gewicht des Block-Polyestercarbonat-Polysiloxans, 0,3 bis 3 Gewichtsprozent Dimethylsiloxaneinheiten umfasst;
wobei die Binderfasern weiter einen oligomeren aromatischen Phosphatester umfassen;
wobei die Binderfasern, basierend auf dem Gewicht der Binderfasern, Folgendes umfassen:

90 bis 98 Gewichtsprozent des Block-Polyestercarbonat-Polysiloxans und
2 bis 10 Gewichtsprozent des oligomeren aromatischen Phosphatesters; und
wobei das Aussetzen der unverfestigten Faserschicht gegenüber einer Temperatur von 250 bis 400°C bei einem Druck von 40 bis 400 Kilopascal durchgeführt wird.

**11.** Ein Verbundstoff, der, basierend auf dem Gewicht des Verbundstoffs, Folgendes umfasst:

25 bis 55 Gewichtsprozent Verstärkungsfasern,
35 bis 65 Gewichtsprozent eines Polyimids und
5 bis 20 Gewichtsprozent eines Block-Polyestercarbonat-Polysiloxans;
wobei das Block-Polyestercarbonat-Polysiloxan einen Polyesterblock umfasst, der Resorcinolestereinheiten mit folgender Struktur umfasst:

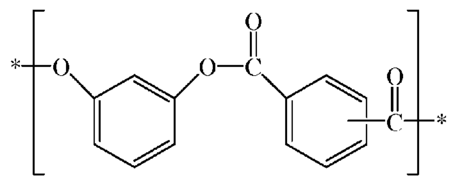,

einen Polycarbonatblock, der Carbonateinheiten mit folgender Struktur umfasst:

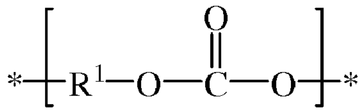,

wobei mindestens 60% der Gesamtzahl von $R^1$-Gruppen aromatische zweiwertige Gruppen sind; und einen Polysiloxanblock, der Dimethylsiloxaneinheiten umfasst; wobei das Block-Polyestercarbonat-Polysiloxan, basierend auf den Gesamtmol von Carbonat- und Estereinheiten, 30 bis 90 Molprozent Resorcinolester, 5 bis 35 Molprozent Carbonateinheiten, wobei $R^1$ 1,3-Phenylen ist, und 5 bis 35 Molprozent Carbonateinheiten, wobei $R^1$ 2,2-bis(1,4-Phenylen)propan ist, und weiter, basierend auf dem Gewicht des Block-Polyestercarbonat-Polysiloxans, 0,2 bis 4 Gewichtsprozent Dimethylsiloxaneinheiten umfasst; und
wobei der Verbundstoff Folgendes hat:
eine Dichte von 0,92 bis 1,38 Gramm/Kubikzentimeter und
eine Flächendichte von 100 bis 3000 Gramm/Quadratmeter.

**12.** Der Verbundstoff gemäß Anspruch 11,
wobei das Block-Polyestercarbonat-Polysiloxan, basierend auf den Gesamtmol der Carbonat- und Estereinheiten, 70 bis 90 Molprozent der Resorcinolestereinheiten, 5 bis 15 Molprozent Carbonateinheiten, wobei $R^1$ 1,3-Phenylen ist, und 5 bis 15 Molprozent Carbonateinheiten, wobei $R^1$ 2,2-bis(1,4-Phenylen)propan ist, und weiter, basierend auf dem Gewicht des Block-Polyestercarbonat-Polysiloxans, 0,3 bis 3 Gewichtsprozent Dimethylsiloxaneinheiten umfasst; und
wobei der Verbundstoff weiter 0,2 bis 2 Gewichtsprozent eines oligomeren aromatischen Phosphatester-Flammverzögerungsmittels umfasst.

**13.** Der Verbundstoff gemäß Anspruch 11,
wobei der Verbundstoff, basierend auf dem Gewicht des Verbundstoffs, Folgendes umfasst:

30 bis 50 Gewichtsprozent der Verstärkungsfasern
40 bis 60 Gewichtsprozent des Polyimids und
5 bis 15 Gewichtsprozent des Block-Polyestercarbonat-Polysiloxans;
wobei der Vliesstoff weiter, basierend auf dem Gesamtgewicht des Vliesstoffs, 0,3 bis 3 Gewichtsprozent eines Flammverzögerungsmittels umfasst;
wobei die Verstärkungsfasern Glasfasern umfassen;
wobei das Polyimid ein Polyetherimid umfasst;
wobei das Block-Polyestercarbonat-Polysiloxan, basierend auf den Gesamtmol der Carbonat- und Estereinheiten im Block-Polyestercarbonat-Polysiloxan, 70 bis 90 Molprozent der Resorcinolestereinheiten, 5 bis 15 Molprozent Carbonateinheiten, wobei $R^1$ 1,3-Phenylen ist, und 5 bis 15 Molprozent Carbonateinheiten, wobei $R^1$ 2,2-bis(1,4-Phenylen)propan ist, und weiter, basierend auf dem Gewicht des Block-Polyestercarbonat-Polysiloxans, 0,3 bis 3 Gewichtsprozent Dimethylsiloxaneinheiten, umfasst; und

wobei das Flammverzögerungsmittel einen oligomeren aromatischen Phosphatester umfasst.

**14.** Ein Verfahren zum Formen eines mehrschichtigen Verbundstoffs, das Folgendes umfasst:
das Aussetzen mindestens zweier Schichten des Vliesstoffs gemäß einem beliebigen der Ansprüche 1-5 gegenüber einer Temperatur von 250 bis 400°C und einem Druck von 300 bis 1.500 Kilopascal über einen Zeitraum von 60 bis 600 Sekunden, um einen mehrschichtigen Verbundstoff zu formen.

## Revendications

**1.** Tissu non tissé, comprenant, sur la base du poids du tissu non tissé :

de 25 à 55 pourcents en poids de fibres de renforcement,
de 35 à 65 pourcents en poids d'un polyimide, et
de 5 à 20 pourcents en poids d'un polyestercarbonate-polysiloxane séquencé ;
dans lequel le polyestercarbonate-polysiloxane séquencé comprend une séquence polyester comprenant des motifs ester de résorcinol ayant la structure

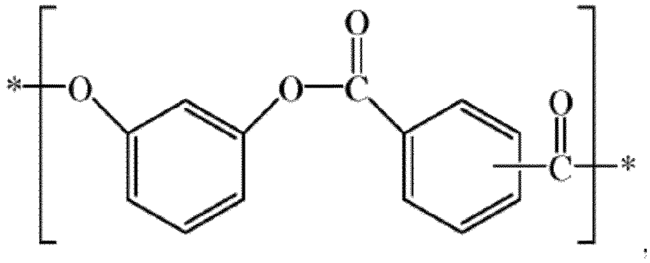

une séquence polycarbonate comprenant des motifs carbonate ayant la structure

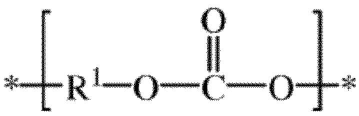

dans lequel au moins 60 pourcents du nombre total de groupes $R^1$ sont des groupes divalents aromatiques, et une séquence polysiloxane comprenant des motifs diméthylsiloxane ; dans lequel le polyestercarbonate-polysiloxane séquencé comprend, sur la base des moles totales des motifs carbonate et ester, de 30 à 90 pourcents en moles d'ester de résorcinol, de 5 à 35 pourcents en moles de motifs carbonate dans lesquels $R^1$ est un groupe 1,3-phénylène, et de 5 à 35 pourcents en moles de motifs carbonate dans lesquels $R^1$ est un groupe 2,2-bis(1,4-phénylène)propane, et comprend en outre, sur la base du poids du polyestercarbonate-polysiloxane séquencé, de 0,2 à 4 pourcents en poids de motifs diméthylsiloxane ;
dans lequel le tissu non tissé a

une densité de 0,03 à 0,2 grammes/centimètre$^3$, et
une densité surfacique de 100 à 400 grammes/mètre$^2$ ; et

dans lequel le tissu non tissé a un module de traction de 50 à 1 000 mégapascals, déterminé selon la norme ASTM D638-14 à une température de 23 °C et en utilisant une vitesse de test de 50 millimètres/minute.

**2.** Tissu non tissé selon la revendication 1,
dans lequel le polyestercarbonate-polysiloxane séquencé comprend, sur la base de moles totales de motifs carbonate et ester, de 70 à 90 pourcents en moles de motifs ester de résorcinol, de 5 à 15 pourcents en moles de motifs carbonate dans lesquels $R^1$ est un groupe 1,3-phénylène, et de 5 à 15 pourcents en moles de motifs carbonate dans lesquels $R^1$ est un groupe 2,2-bis(1,4-phénylène)propane, et comprend en outre, sur la base du poids du polyestercarbonate-polysiloxane séquencé, de 0,3 à 3 pourcents en poids de motifs diméthylsiloxane ; et
dans lequel le tissu non tissé comprend en outre de 0,2 à 2 pourcents en poids d'un retardateur de flamme de type ester d'organophosphate.

**3.** Tissu non tissé selon la revendication 2, dans lequel le retardateur de flamme de type ester d'organophosphate comprend un ester de phosphate oligomèrique.

**4.** Tissu non tissé selon l'une quelconque des revendications 1 à 3, dans lequel les fibres de renforcement comprennent les fibres de verre.

**5.** Tissu non tissé selon la revendication 1,
dans lequel le tissu non tissé comprend, sur la base du poids du tissu non tissé,

de 30 à 50 pourcents en poids des fibres de renforcement,
de 40 à 60 pourcents en poids du polyimide, et
de 5 à 15 pourcents du polyestercarbonate-polysiloxane séquencé ;

dans lequel le tissu non tissé comprend en outre, sur la base du poids du tissu non tissé, de 0,3 à 3 pourcents en poids d'un retardateur de flamme ;
dans lequel les fibres de renforcement comprennent les fibres de verre ;
dans lequel le polyimide comprend un polyétherimide ;

dans lequel le polyestercarbonate-polysiloxane séquencé comprend, sur la base des moles totales des motifs carbonate et ester dans le polyestercarbonate-polysiloxane séquencé, de 70 à 90 pourcents en moles des motifs ester de résorcinol, de 5 à 15 pourcents en moles de motifs carbonate dans lesquels $R^1$ est un groupe 1,3-phénylène, et de 5 à 15 pourcents en moles de motifs carbonate dans lesquels $R^1$ est un groupe 2,2-bis(1,4-phénylène)propane, et comprend en outre, sur la base du poids du polyestercarbonate-polysiloxane séquencé, de 0,3 à 3 pourcents en poids de motifs diméthylsiloxane ; et
dans lequel le retardateur de flamme comprend un ester de phosphate oligomère.

**6.** Procédé de formation d'un tissu non tissé, le procédé comprenant :

la formation d'une couche de suspension aqueuse comprenant

de l'eau,
de 25 à 55 pourcents en poids de fibres de renforcement,
de 35 à 65 pourcents en poids de fibres de polyimide, et
de 5 à 20 pourcents en poids de fibres de liant comprenant un polyestercarbonate-polysiloxane séquencé,

dans lequel les valeurs en pourcents en poids sont basées sur le poids total des fibres de renforcement, des fibres de polyimide et des fibres de liant ;
au moins partiellement l'élimination de l'eau de la couche de suspension aqueuse pour former une couche de fibres ; et
l'exposition de la couche de fibres à une température de 250 à 320 °C, faisant ainsi fondre les fibres de liant, au moins partiellement faisant fondre les fibres de polyimide et formant un tissu non tissé ;
dans lequel le polyestercarbonate-polysiloxane séquencé comprend une séquence polyester comprenant des motifs ester de résorcinol ayant la structure

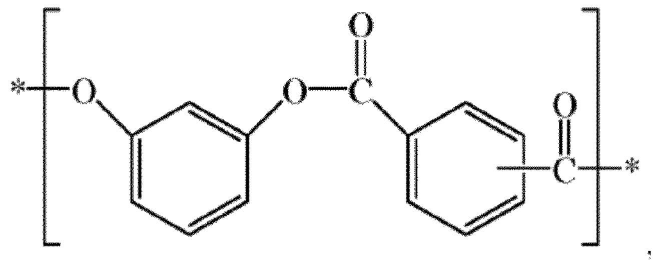

une séquence polycarbonate comprenant des motifs carbonate ayant la structure

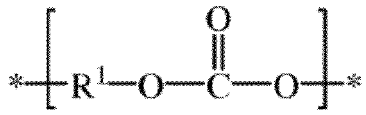

dans lequel au moins 60 pourcents du nombre total de groupes $R^1$ sont des groupes divalents aromatiques, et une séquence polysiloxane comprenant des motifs diméthylsiloxane ; dans lequel le polyestercarbonate-polysiloxane séquencé comprend, sur la base des moles totales des motifs carbonate et ester, de 30 à 90 pourcents en moles d'ester de résorcinol, de 5 à 35 pourcents en moles de motifs carbonate dans lesquels $R^1$ est un groupe 1,3-phénylène, et de 5 à 35 pourcents en moles de motifs carbonate dans lesquels $R^1$ est un groupe 2,2-bis(1,4-phénylène)propane, et comprend en outre, sur la base du poids du polyestercarbonate-polysiloxane séquencé, de 0,2 à 4 pourcents en poids de motifs diméthylsiloxane.

**7.** Procédé selon la revendication 6, dans lequel l'exposition de la couche de fibres non consolidée à une température de 250 à 400 °C est réalisée à une pression de 40 à 400 kilopascals.

**8.** Procédé selon la revendication 6 ou 7,
dans lequel la couche de suspension aqueuse et la couche de fibres comprend en outre un agent de modification de la viscosité ; et
dans lequel le procédé comprend en outre le lavage de la couche de fibres pour éliminer au moins partiellement

l'agent de modification de la viscosité.

**9.** Procédé selon l'une quelconque des revendications 6 à 8, dans lequel le polyestercarbonate-polysiloxane séquencé comprend, sur la base des moles totales des motifs carbonate et ester dans le polyestercarbonate-polysiloxane séquencé, de 70 à 90 pourcents en moles de motifs ester de résorcinol, de 5 à 15 pourcents en moles de motifs carbonate dans lesquels $R^1$ est un groupe 1,3-phénylène, et de 5 à 15 pourcents en moles de motifs carbonate dans lesquels $R^1$ est un groupe 2,2-bis(1,4-phénylène)propane, et comprend en outre, sur la base du poids du polyestercarbonate-polysiloxane séquencé, de 0,3 à 3 pourcents en poids de motifs diméthylsiloxane ;
dans lequel les fibres de liant comprennent en outre un ester de phosphate aromatique oligomèrique ; et
dans lequel les fibres de liant comprennent, sur la base du poids des fibres de liant,

de 90 à 98 pourcents en poids du polyestercarbonate-polysiloxane séquencé, et
de 2 à 10 pourcents en poids de l'ester de phosphate aromatique oligomèrique.

**10.** Procédé selon la revendication 6,
dans lequel la couche de suspension aqueuse comprend

de 30 à 50 pourcents en poids des fibres de renforcement,
de 40 à 60 pourcents en poids des fibres de polyimide, et
de 5 à 15 pourcents en poids des fibres de liant ;

dans lequel la couche de suspension aqueuse et la couche de fibres comprennent en outre un agent de modification de la viscosité ;
dans lequel le procédé comprend en outre le lavage de la couche de fibres pour éliminer au moins partiellement l'agent de modification de la viscosité ;
dans lequel les fibres de renforcement comprennent les fibres de verre ;
dans lequel les fibres de polyimide comprennent un polyétherimide ;
dans lequel le polyestercarbonate-polysiloxane séquencé comprend, sur la base de moles totales de motifs carbonate et ester dans le polyestercarbonate-polysiloxane séquencé, de 70 à 90 pourcents en moles de motifs ester de résorcinol, de 5 à 15 pourcents en moles de motifs carbonate dans lesquels $R^1$ est un groupe 1,3-phénylène, et de 5 à 15 pourcents en moles de motifs carbonate dans lesquels $R^1$ est un groupe 2,2-bis(1,4-phénylène)propane, et comprend en outre, sur la base du poids du polyestercarbonate-polysiloxane séquencé, de 0,3 à 3 pourcents en poids de motifs diméthylsiloxane ;
dans lequel les fibres de liant comprennent en outre un ester de phosphate aromatique oligomèrique ;
dans lequel les fibres de liant comprennent, sur la base du poids des fibres de liant,

de 90 à 98 pourcents en poids du polyestercarbonate-polysiloxane séquencé, et
de 2 à 10 pourcents en poids de l'ester de phosphate aromatique oligomèrique ; et

dans lequel l'exposition de la couche de fibres non consolidée à une température de 250 à 400 °C est réalisée à une pression de 40 à 400 kilopascals.

**11.** Composite, comprenant, sur la base du poids du composite :

de 25 à 55 pourcents en poids de fibres de renforcement,
de 35 à 65 pourcents en poids d'un polyimide, et
de 5 à 20 pourcents en poids d'un polyestercarbonate-polysiloxane séquencé ;
dans lequel le polyestercarbonate-polysiloxane séquencé comprend une séquence polyester comprenant des motifs ester de résorcinol ayant la structure

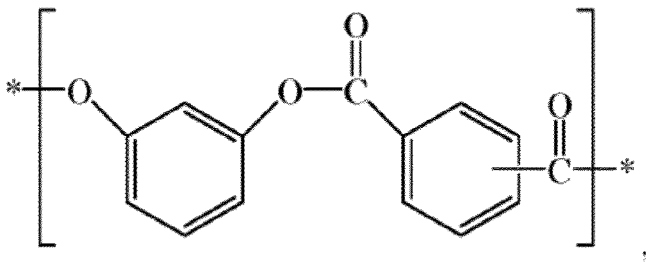

une séquence polycarbonate comprenant des motifs carbonate ayant la structure

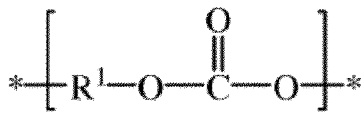

dans lequel au moins 60 pourcents du nombre total de groupes $R^1$ sont des groupes divalents aromatiques, et une séquence polysiloxane comprenant des motifs diméthylsiloxane ; dans lequel le polyestercarbonate-polysiloxane séquencé comprend, sur la base des moles totales des motifs carbonate et ester, de 30 à 90 pourcents en moles d'ester de résorcinol, de 5 à 35 pourcents en moles de motifs carbonate dans lesquels $R^1$ est un groupe 1,3-phénylène, et de 5 à 35 pourcents en moles de motifs carbonate dans lesquels $R^1$ est un groupe 2,2-bis(1,4-phénylène)propane, et comprend en outre, sur la base du poids du polyestercarbonate-polysiloxane séquencé, de 0,2 à 4 pourcents en poids de motifs diméthylsiloxane ; et
dans lequel le composite a

une densité de 0,92 à 1,38 gramme/centimètre$^3$, et
une densité surfacique de 100 à 3000 grammes/mètre$^2$.

**12.** Composite selon la revendication 11,
dans lequel le polyestercarbonate-polysiloxane séquencé comprend, sur la base des moles totales des motifs carbonate et ester, de 70 à 90 pourcents en moles de motifs ester de résorcinol, de 5 à 15 pourcents en moles de motifs carbonate dans lesquels $R^1$ est un groupe 1,3-phénylène, et de 5 à 15 pourcents en moles de motifs carbonate dans lesquels $R^1$ est un groupe 2,2-bis(1,4-phénylène)propane, et comprend en outre, sur la base du poids du polyestercarbonate-polysiloxane séquencé, de 0,3 à 3 pourcents en poids de motifs diméthylsiloxane ; et
dans lequel le composite comprend en outre de 0,2 à 2 pourcents en poids d'un retardateur de flamme de type ester de phosphate aromatique oligomèrique.

**13.** Composite selon la revendication 11,
dans lequel le composite comprend, sur la base du poids du composite,

de 30 à 50 pourcents en poids des fibres de renforcement, et
de 40 à 60 pourcents en poids du polyimide, et
de 5 à 15 pourcents en poids du polyestercarbonate-polysiloxane séquencé ;

dans lequel le tissu non tissé comprend en outre, sur la base du poids total du tissu non tissé, de 0,3 à 3 pourcents en poids d'un retardateur de flamme ;
dans lequel les fibres de renforcement comprennent les fibres de verre ;
dans lequel le polyimide comprend un polyétherimide ;
dans lequel le polyestercarbonate-polysiloxane séquencé comprend, sur la base de moles totales de motifs carbonate et ester dans le polyestercarbonate-polysiloxane séquencé, de 70 à 90 pourcents en moles de motifs ester de résorcinol, de 5 à 15 pourcents en moles de motifs carbonate dans lesquels $R^1$ est un groupe 1,3-phénylène, et de 5 à 15 pourcents en moles de motifs carbonate dans lesquels $R^1$ est un groupe 2,2-bis(1,4-phénylène)propane, et comprend en outre, sur la base du poids du polyestercarbonate-polysiloxane séquencé, de 0,3 à 3 pourcents en poids de motifs diméthylsiloxane ;
dans lequel le retardateur de flamme comprend un ester de phosphate aromatique oligomèrique.

**14.** Procédé de formation d'un composite multicouche, le procédé comprenant :

l'exposition d'au moins deux couches de tissu non tissé selon l'une quelconque des revendications 1 à 5 à une température de 250 à 400 °C et une pression de 300 à 1 500 kilopascals pendant une période de 60 à 600 secondes pour donner un composite multicouche.

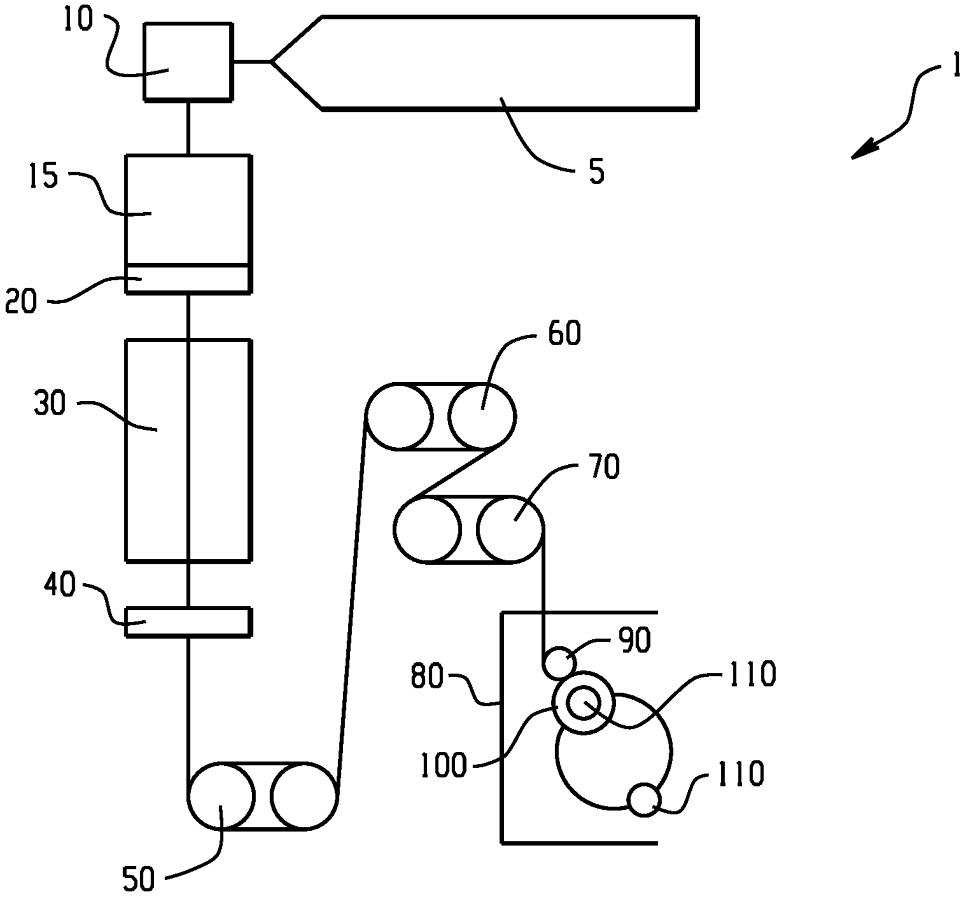
10
5
1
15
20
30
40
60
70
90
80
110
100
110
50

Fig. 1

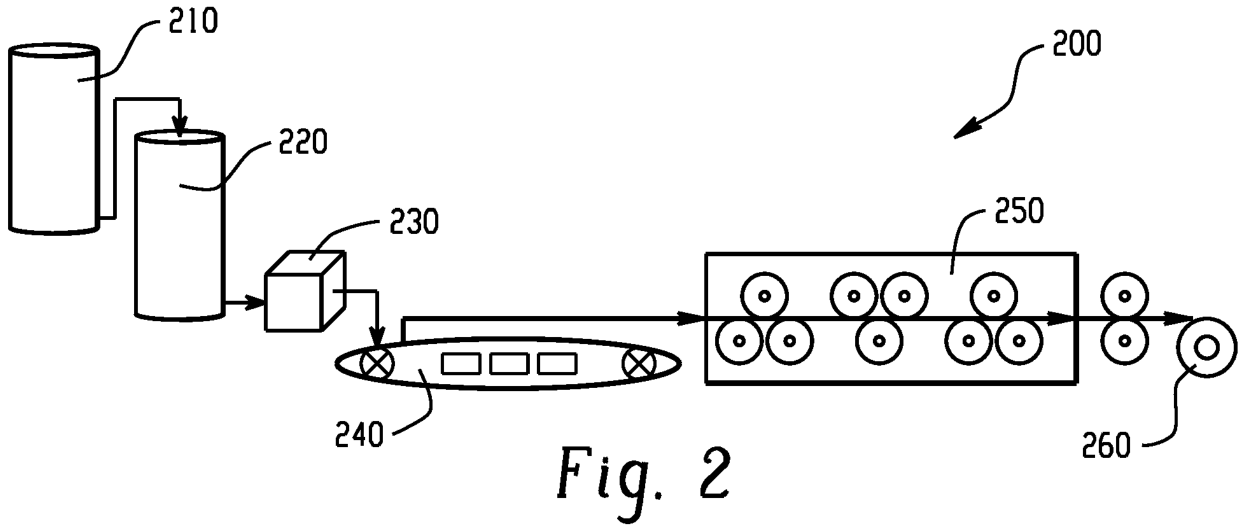
210
200
220
230
250
240
260

Fig. 2

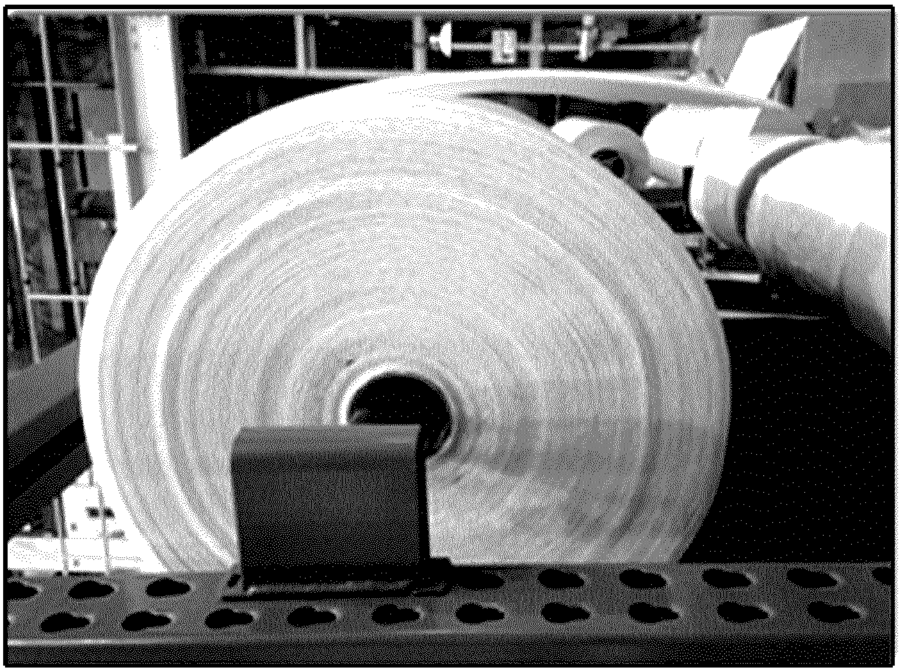

Fig. 3A

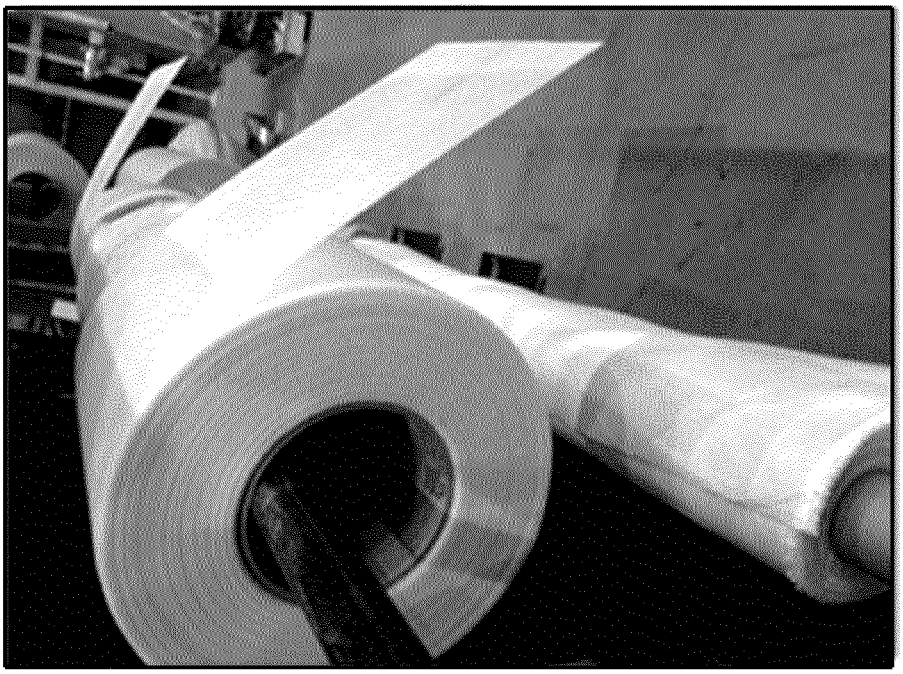

Fig. 3B

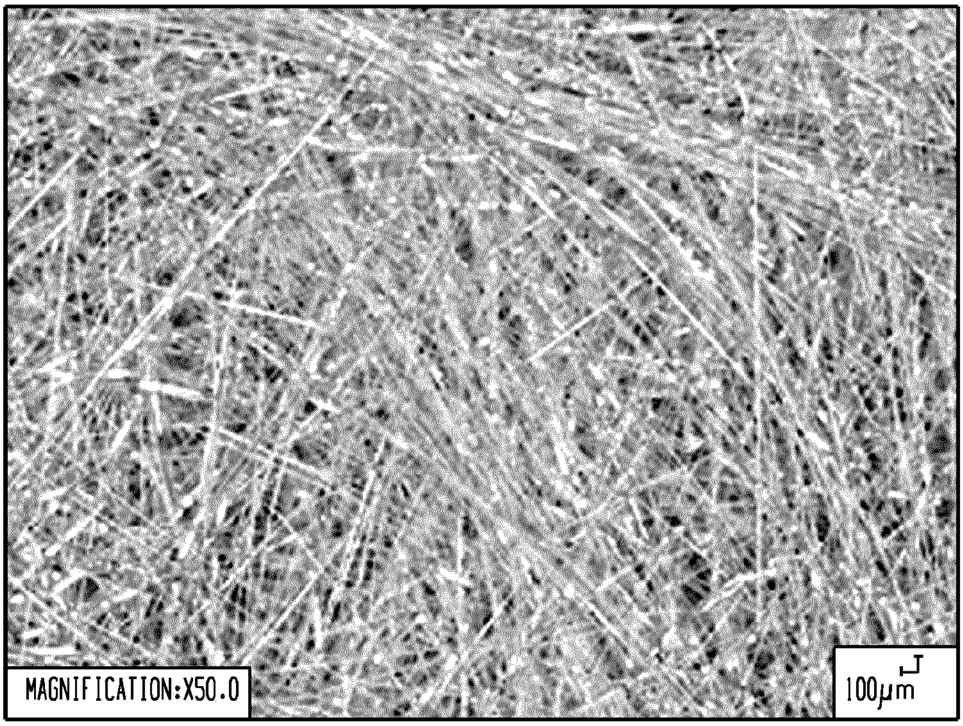


Fig. 4A

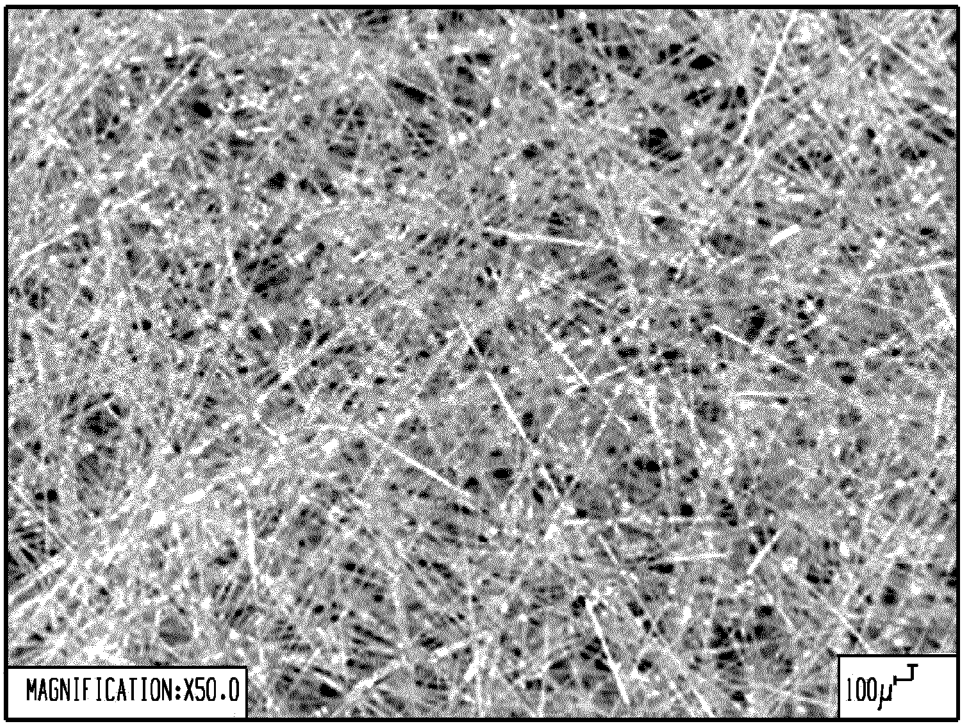


Fig. 4B

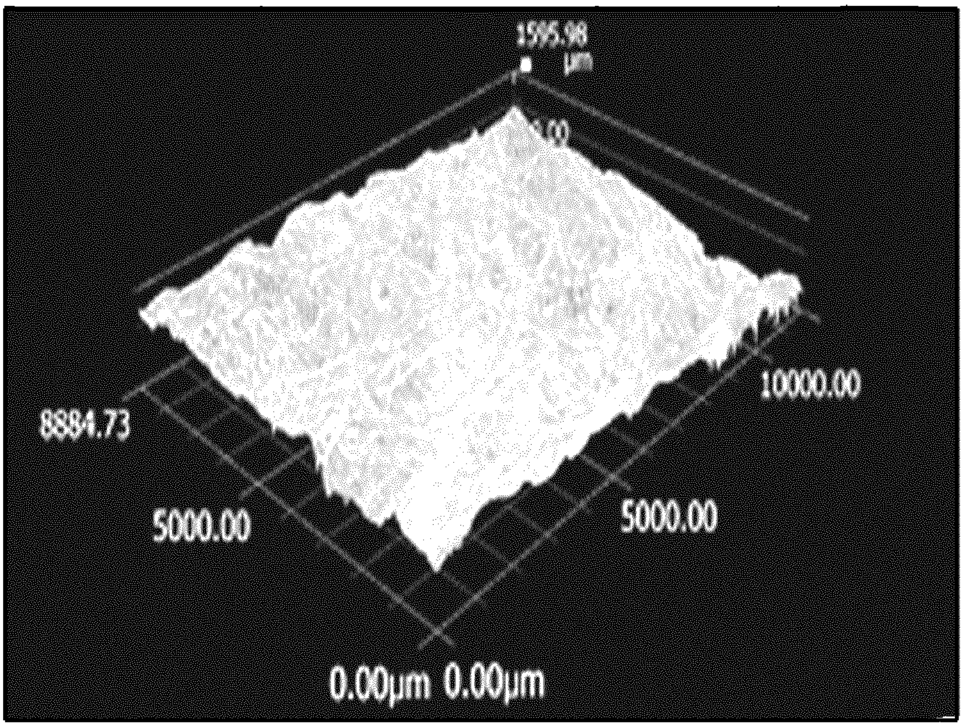
1595.98
µm
8884.73
10000.00
5000.00
5000.00
0.00µm 0.00µm

Fig. 5A

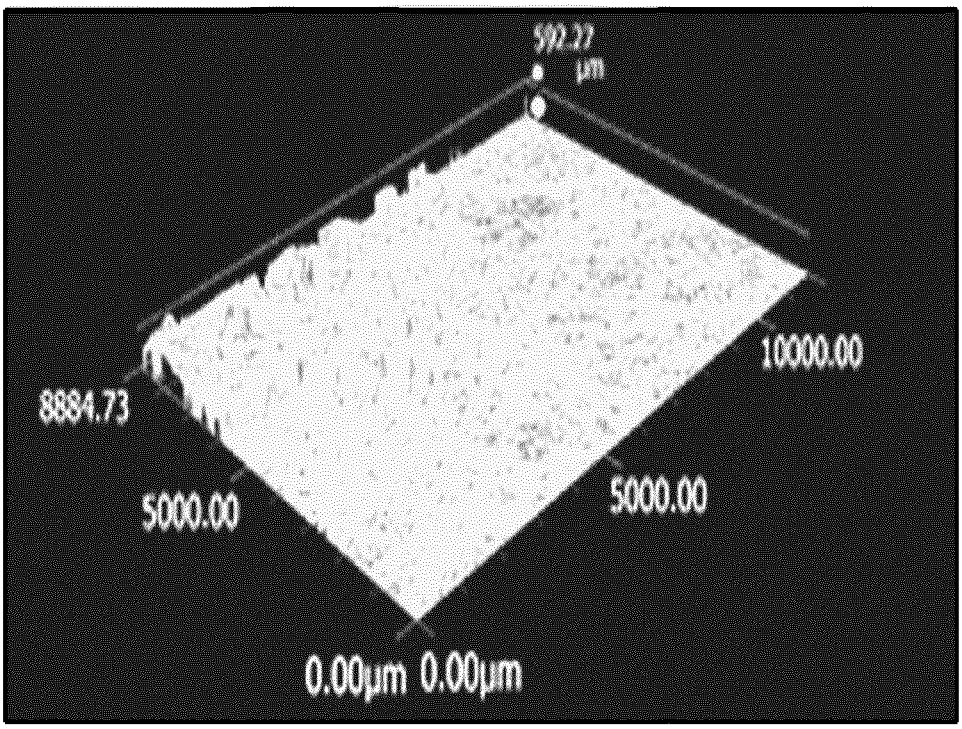
592.27
µm
8884.73
10000.00
5000.00
5000.00
0.00µm 0.00µm

Fig. 5B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20120065283 A1, Adjei
- US 3847867 A, Heath
- US 3850885 A, Takekoshi
- US 3852242 A
- US 3855178 A, White
- US 3983093 A, Williams
- US 4443591 A, Schmidt
- US 3972902 A, Heath
- US 4455410 A, Giles
- US 7790292 B2, Colborn
- US 4994544 A, Nagahiro
- US 5716567 A, Musina


### Non-patent literature cited in the description


- *CHEMICAL ABSTRACTS,* 89492-23-9
- *CHEMICAL ABSTRACTS,* 78-33-1
- *CHEMICAL ABSTRACTS,* 57583-54-7
- *CHEMICAL ABSTRACTS,* 181028-79-5
- *CHEMICAL ABSTRACTS,* No. 115-86-6
- *CHEMICAL ABSTRACTS,* 68937-41-7
- *CHEMICAL ABSTRACTS,* No. 56803-37-3
- *CHEMICAL ABSTRACTS,* 65652-41-7
- *CHEMICAL ABSTRACTS,* 119345-01-6